# EUROPEAN PATENT APPLICATION

(11) **EP 4 852 089 A1**
(43) Date of publication of application: **09.12.2026**
(21) Application number: 25748220.8
(22) Date of filing: 20.01.2025
(51) Int. Cl.: H01M 4/525, H01M 4/36, H01M 4/505

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(30) Priority: 02.02.2024 JP 2024015287
(71) Applicant: Panasonic Intellectual Property Management Co., Ltd., Kadoma-shi, Osaka 571-0057 (JP)
(72) Inventor: SAITO, Motoharu, Kadoma-shi, Osaka 571-0057 (JP); OGASAWARA, Takeshi, Kadoma-shi, Osaka 571-0057 (JP); HIBINO, Mitsuhiro, Kadoma-shi, Osaka 571-0057 (JP)
(74) Representative: Novagraaf International SA
(86) International application number: PCT/JP2025/001594
(87) International publication number: WO 2025/164411

(57) **Abstract**

This positive electrode active material contains a lithium transition metal composite oxide in which the total Ni and Mn content is 80 mol% or greater with respect to the total molar amount of metal elements excluding Li. The lithium transition metal composite oxide has a single particle form, has a volume-based median diameter of 0.5-5.0 µm, and a crystallite size of 370-1500 Å. A sulfur compound and a boron compound are present on the surfaces of the composite oxide particles, and in an XPS spectrum of the positive electrode active material, a peak derived from Ni is present in the range of 172-176 eV in binding energy in the surfaces of the composite oxide particles and the region at a depth of less than 50 nm from the surface, and a peak derived from Mn is present in the range of 194-198 eV.

## Description

### TECHNICAL FIELD

The present disclosure relates to a positive electrode active material for a non-aqueous electrolyte secondary battery and a non-aqueous electrolyte secondary battery using the positive electrode active material.

### BACKGROUND ART

In non-aqueous electrolyte secondary batteries such as lithium ion secondary batteries, the positive electrode greatly affects battery performance including input/output characteristics, capacity, cycle characteristics, and thermal stability, and therefore many studies have been conducted on the positive electrode. For example, Patent Literature 1 proposes a non-aqueous electrolyte secondary battery that contains a sodium salt and at least one of the group consisting of a sulfate and a sulfite for the purpose of improving high-temperature durability. Patent Literature 1 describes production of a positive electrode by applying sodium sulfate, sodium sulfite, or the like onto a surface of a positive electrode mixture layer.

### CITATION LIST

### PATENT LITERATURE

PATENT LITERATURE 1: Japanese Unexamined Patent Application Publication No. 2018-60693

### SUMMARY

When the charging voltage of a battery increases, the resistance of the positive electrode increases, and the increase in resistance becomes particularly pronounced in a region where the state of charge (SOC) is high. Therefore, to realize higher charging voltages, it is an important object to suppress such an increase in resistance. In particular, for long-term use of a battery, it is important not only to reduce the initial resistance but rather to suppress an increase in resistance accompanying charge-discharge cycle, which consequently leads to improvement in capacity retention rate.

The positive electrode active material of the present disclosure includes a lithium transition metal composite oxide having a total content of Ni and Mn of greater than or equal to 80 mol% relative to a total molar amount of metal elements excluding Li, wherein the lithium transition metal composite oxide has a single-particle morphology, and has a volume-based median diameter of greater than or equal to 0.5 µm and less than or equal to 5.0 µm, and a crystallite size of greater than or equal to 370 Å and less than or equal to 1500 Å; a sulfur compound and a boron compound are present on particle surfaces of the lithium transition metal composite oxide; and a photoelectron spectrum obtained by X-ray photoelectron spectroscopy (XPS) shows a peak derived from Ni having a binding energy in a range of greater than or equal to 172 eV and less than or equal to 176 eV and a peak derived from Mn having a binding energy in a range of greater than or equal to 194 eV and less than or equal to 198 eV on particle surfaces of the lithium transition metal composite oxide and in a region at a depth of less than 50 nm from the surfaces.

The non-aqueous electrolyte secondary battery according to the present disclosure comprises a positive electrode including the positive electrode active material, a negative electrode, and a non-aqueous electrolyte.

According to the positive electrode active material of the present disclosure, a non-aqueous electrolyte secondary battery in which an increase in resistance during high-potential charging is suppressed can be realized.

### BRIEF DESCRIPTION OF DRAWINGS

FIG. 1 is a sectional view of a non-aqueous electrolyte secondary battery as an example of an embodiment.
FIG. 2 is a sectional view of a test cell produced in an experimental example.
FIG. 3A is an XPS spectrum of a positive electrode active material produced in Experimental Example F9, and shows a binding energy range in which a peak derived from B appears.
FIG. 3B is an XPS spectrum of a positive electrode active material produced in Experimental Example G3, and shows a binding energy range in which a peak derived from B appears.
FIG. 3C is an XPS spectrum of a positive electrode active material produced in Experimental Example G8, and shows a binding energy range in which a peak derived from B appears.
FIG. 4A is an XPS spectrum of a positive electrode active material produced in Experimental Example F9, and shows a binding energy range in which a peak derived from S appears.
FIG. 4B is an XPS spectrum of a positive electrode active material produced in Experimental Example F4, and shows a binding energy range in which a peak derived from S appears.
FIG. 4C is an XPS spectrum of a positive electrode active material produced in Experimental Example G8, and shows a binding energy range in which a peak derived from S appears.
FIG. 5A is an XPS spectrum of a positive electrode active material produced in Experimental Example F9, and shows a binding energy range in which a peak derived from Ni appears.
FIG. 5B is an XPS spectrum of a positive electrode active material produced in Experimental Example G3, and shows a binding energy range in which a peak derived from Ni appears.
FIG. 5C is an XPS spectrum of a positive electrode active material produced in Experimental Example F4, and shows a binding energy range in which a peak derived from Ni appears.
FIG. 5D is an XPS spectrum of a positive electrode active material produced in Experimental Example G8, and shows a binding energy range in which a peak derived from Ni appears.
FIG. 6A is an XPS spectrum of a positive electrode active material produced in Experimental Example F9, and shows a binding energy range in which a peak derived from Mn appears.
FIG. 6B is an XPS spectrum of a positive electrode active material produced in Experimental Example G3, and shows a binding energy range in which a peak derived from Mn appears.
FIG. 6C is an XPS spectrum of a positive electrode active material produced in Experimental Example F4, and shows a binding energy range in which a peak derived from Mn appears.
FIG. 6D is an XPS spectrum of a positive electrode active material produced in Experimental Example G8, and shows a binding energy range in which a peak derived from Mn appears.
FIG. 7A is an XPS spectrum of a positive electrode active material produced in Experimental Example F9, and shows a binding energy range in which a peak derived from Na appears.
FIG. 7B is an XPS spectrum of a positive electrode active material produced in Experimental Example F4, and shows a binding energy range in which a peak derived from Na appears.
FIG. 8 is a backscattered electron image of a positive electrode active material produced in Experimental Example F9.
FIG. 9 is a backscattered electron image of a positive electrode active material produced in Experimental Example F2.
FIG. 10 is a backscattered electron image of a positive electrode active material produced in Experimental Example G8.

### DESCRIPTION OF EMBODIMENTS

In recent years, with the widespread use of non-aqueous electrolyte secondary batteries such as lithium ion batteries for in-vehicle applications and energy storage applications, higher charging voltages have been demanded from the viewpoints of higher capacity and requirements for rapid charging. However, for example, when the charging voltage is increased to a level of 4.5 V (vs. Li metal), an increase in resistance of the positive electrode becomes particularly pronounced in a region where the SOC is high. In addition, non-aqueous electrolyte secondary batteries are required to further improve charge-discharge efficiency and durability. Furthermore, reduction in manufacturing cost is also desired, and the positive electrode active material preferably contains Ni and Mn as main components, which provide high capacity and are relatively inexpensive.

The present inventors have succeeded in suppressing an increase in resistance during high-potential charging while ensuring excellent charge-discharge efficiency and durability by using a positive electrode active material in which a boron compound and a sulfur compound are present on particle surfaces of a composite oxide having a single-particle morphology containing Ni and Mn, and in which peaks derived from Ni and Mn in an XPS spectrum greatly shift toward a higher energy side on particle surfaces of the composite oxide and in a region at a depth of less than 50 nm from the surfaces. The use of the positive electrode active material of the present disclosure effectively suppresses an increase in resistance in a high SOC region. The effect of suppressing such an increase in resistance is obtained specifically in the composite oxide having a single-particle morphology.

Hereinafter, an example of an embodiment of a positive electrode active material for a non-aqueous electrolyte secondary battery according to the present disclosure and a non-aqueous electrolyte secondary battery using the positive electrode active material will be described in detail with reference to the drawings. Note that the scope of the present disclosure includes a configuration composed of selective combination of constituents of a plurality of embodiments and modifications described below.

In the following description, a non-aqueous electrolyte secondary battery 10, which is a cylindrical battery in which a bottomed cylindrical housing can 16 houses a wound electrode assembly 14, will be illustrated, but the outer case of the battery is not limited to a cylindrical housing can. Examples of other embodiments of the non-aqueous electrolyte secondary battery according to the present disclosure include a prismatic battery comprising a prismatic housing can, a coin-type battery comprising a coin-type housing can, and a pouch-type battery comprising an outer case composed of a laminate sheet including a metal layer and a resin layer. The electrode assembly is not limited to the wound-type, and may be a laminate electrode assembly in which a plurality of positive electrodes and a plurality of negative electrodes are alternately stacked one by one via separators.

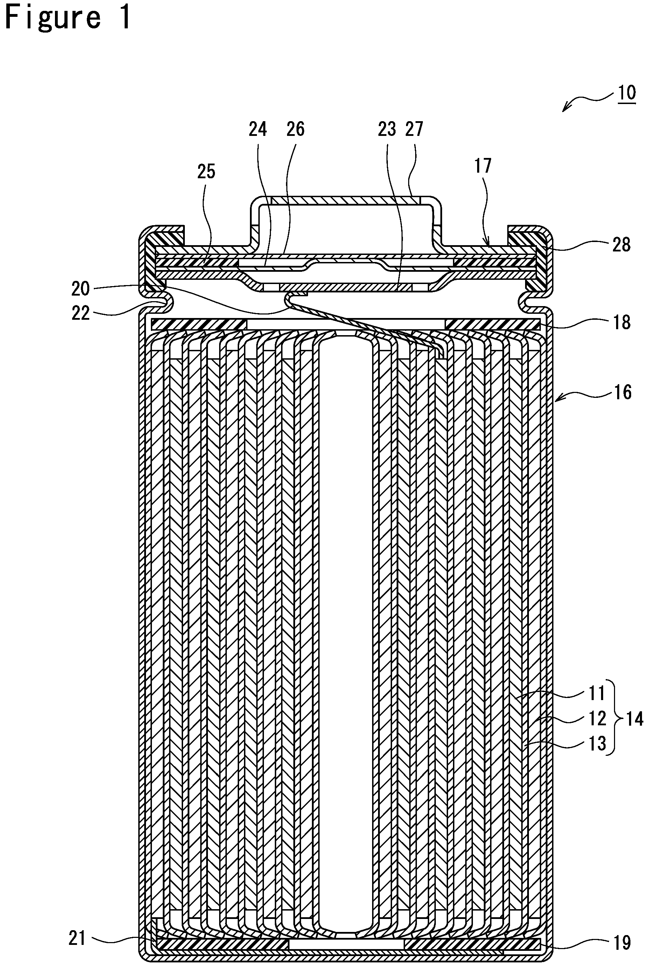

FIG. 1 is a sectional view of a non-aqueous electrolyte secondary battery 10 as an example of an embodiment. As shown in FIG. 1, the non-aqueous electrolyte secondary battery 10 comprises a wound electrode assembly 14, a non-aqueous electrolyte, and a housing can 16 that houses the electrode assembly 14 and the non-aqueous electrolyte. The non-aqueous electrolyte secondary battery 10 is, for example, a lithium-ion secondary battery. The electrode assembly 14 includes a positive electrode 11, a negative electrode 12, and a separator 13 and has a wound structure in which the positive electrode 11 and the negative electrode 12 are wound with the separator 13 interposed therebetween. The housing can 16 is a bottomed cylindrical metal container having an opening on one side in an axial direction, and the opening of the housing can 16 is sealed with a sealing assembly 17. Hereinafter, for convenience of explanation, the sealing assembly 17 side of the battery is described as the top, and the bottom side of the housing can 16 is described as the bottom.

The positive electrode 11, the negative electrode 12, and the separator 13 that constitute the electrode assembly 14 are each a long strip-shaped member, and are alternately laminated in the radial direction of the electrode assembly 14 by being spirally wound. The negative electrode 12 is formed to be one size larger than the positive electrode 11 to prevent precipitation of lithium. In other words, the negative electrode 12 is formed to be longer than the positive electrode 11 in a length direction (longitudinal direction) and in a width direction (lateral direction). Two separators 13 are formed at least one size larger than the positive electrode 11 and disposed to sandwich the positive electrode 11, for example. The electrode assembly 14 has a positive electrode lead 20 connected to the positive electrode 11 by means of welding or the like, and a negative electrode lead 21 connected to the negative electrode 12 by means of welding or the like.

Insulating plates 18 and 19 are respectively arranged above and below the electrode assembly 14. In the example illustrated in FIG. 1, the positive electrode lead 20 extends through a through-hole in the insulating plate 18 to the side of the sealing assembly 17, and the negative electrode lead 21 extends outside the insulating plate 19 to the side of the bottom of the housing can 16. The positive electrode lead 20 is connected to the lower surface of an internal terminal plate 23 of the sealing assembly 17, by means of welding or the like, and a cap 27, the top plate of the sealing assembly 17 electrically connected to the internal terminal plate 23, serves as a positive electrode terminal. The negative electrode lead 21 is connected to the inner surface of the bottom of the housing can 16 by means of welding or the like, and the housing can 16 serves as a negative electrode terminal.

A gasket 28 is provided between the housing can 16 and the sealing assembly 17 to ensure that the interior of the battery is tightly sealed. The housing can 16 includes a grooved portion 22 formed to have a part of a side surface portion projected inward and support the sealing assembly 17. The grooved portion 22 is preferably formed annularly along the peripheral direction of the housing can 16, supporting the sealing assembly 17 by the upper surface thereof. The sealing assembly 17 is fixed to an upper portion of the housing can 16 by means of the grooved portion 22 and an opening end portion of the housing can 16 which is crimped to the sealing assembly 17.

The sealing assembly 17 has a structure in which an internal terminal plate 23, a lower vent member 24, an insulating member 25, an upper vent member 26, and a cap 27 are layered in the order from the side of the electrode assembly 14. The members forming the sealing assembly 17 each have, for example, a disk shape or a ring shape, and the members except for the insulating member 25 are each electrically connected to one another. The lower vent member 24 and the upper vent member 26 are connected at each center part, and the insulating member 25 is interposed between the peripheral edges of the vent members. When the internal pressure of the battery rises due to abnormal heat generation, the lower vent member 24 deforms and breaks so as to push up the upper vent member 26 toward the side of the cap 27, and the current path between the lower vent member 24 and the upper vent member 26 is disconnected. When the internal pressure further increases, the upper vent member 26 breaks to emit gas from an opening portion of the cap 27.

Hereinafter, the positive electrode 11, the negative electrode 12, the separator 13, and the non-aqueous electrolyte, all of which constitute the non-aqueous electrolyte secondary battery 10, particularly, the positive electrode active material constituting the positive electrode 11 will be described in detail.

### [Positive Electrode]

The positive electrode 11 has a positive electrode core and a positive electrode mixture layer disposed on the positive electrode core. As the positive electrode core, a foil of a metal that is stable in a potential range of the positive electrode 11, such as aluminum, an aluminum alloy, stainless steel, or titanium, and a film with the metal disposed on the surface layer, or the like can be used. The positive electrode mixture layer includes a positive electrode active material, a conductive agent, and a binder, and is preferably provided on both surfaces of the positive electrode core. The positive electrode 11 can be produced, for example, by applying a positive electrode mixture slurry including a positive electrode active material, a conductive agent, and a binder onto the positive electrode core, drying the coating, and then compressing the dried coating to form a positive electrode mixture layer on both surfaces of the positive electrode core.

Examples of the conductive agent included in the positive electrode mixture layer include carbon black such as acetylene black and Ketjenblack, graphite, carbon nanotubes (CNTs), carbon nanofibers, graphene, metal fibers, metal powders, and conductive whiskers. The conductive agent may be used singly or in combination of a plurality of types thereof. The content of the conductive agent is not particularly limited, but is, for example, greater than or equal to 0.1 mass% and less than or equal to 5 mass% relative to a mass of the positive electrode mixture layer.

Examples of the binder included in the positive electrode mixture layer include fluorine-containing resins such as polytetrafluoroethylene (PTFE) and polyvinylidene fluoride (PVDF); olefin-based resins such as polyethylene, polypropylene, ethylene-propylene-isoprene copolymers, and ethylene-propylene-butadiene copolymers; polyacrylonitrile (PAN), polyimide, polyamide, and acrylic resins such as ethylene-acrylic acid copolymers. These resins may also be used in combination with carboxymethyl cellulose (CMC) or a salt thereof, polyethylene oxide (PEO), or the like. The binder may be used singly or in combination of a plurality of types thereof. The content of the binder is not particularly limited, but is, for example, greater than or equal to 0.1 mass% and less than or equal to 5 mass% relative to a mass of the positive electrode mixture layer.

The positive electrode active material includes a lithium transition metal composite oxide having a total content of Ni and Mn of greater than or equal to 80 mol% relative to a total molar amount of metal elements excluding Li. The lithium transition metal composite oxide has a single-particle morphology, and has a volume-based median diameter (D50) of greater than or equal to 0.5 µm and less than or equal to 5.0 µm, and a crystallite size of greater than or equal to 370 Å and less than or equal to 1500 Å. A sulfur compound and a boron compound are present on particle surfaces of the lithium transition metal composite oxide, and in a photoelectron spectrum obtained by X-ray photoelectron spectroscopy (XPS) of the positive electrode active material, the photoelectron spectrum shows a peak derived from Ni having a binding energy in a range of greater than or equal to 858 eV and less than or equal to 862 eV and a peak derived from Mn having a binding energy in a range of greater than or equal to 645 eV and less than or equal to 649 eV on particle surfaces of the lithium transition metal composite oxide and in a region at a depth of less than 50 nm from the surfaces.

As will be described in detail later, the photoelectron spectrum obtained by X-ray photoelectron spectroscopy (XPS) of the positive electrode active material shows a peak derived from S having a binding energy in a range of greater than or equal to 172 eV and less than or equal to 176 eV and a peak derived from B having a binding energy in a range of greater than or equal to 194 eV and less than or equal to 198 eV on particle surfaces of the lithium transition metal composite oxide and in a region at a depth of less than 100 nm from the surfaces. Unless otherwise specified, the position of a peak in an XPS spectrum means the position of the peak top.

When the lithium transition metal composite oxide has a single-particle morphology, an effect of reduction in resistance by the addition of a boron compound and a sulfur compound is obtained. As used herein, the term "single particle" means a particle formed of one primary particle, rather than a secondary particle formed by aggregation of a large number (for example, 1000 or more) of primary particles. That is, particle interfaces of primary particles are substantially absent inside the particle. A particle formed by aggregation of less than or equal to 10 primary particles approximates a single-particle morphology and can be substantially regarded as a single particle. The single particle may be a single-crystal particle in which crystal grain boundaries are substantially absent inside the particle, or may be a polycrystalline particle in which several crystal grain boundaries are present inside the particle.

A lithium transition metal composite oxide in which a boron compound and a sulfur compound adhere to particle surfaces preferably has a single-particle morphology in greater than or equal to 80% of all particles. In other words, a composite oxide having a secondary-particle morphology formed by aggregation of primary particles may be included in an amount of less than or equal to 20% of all particles, and at such a level, an effect similar to that obtained when all particles have a single-particle morphology is obtained.

The D50 of the lithium transition metal composite oxide is, as described above, greater than or equal to 0.5 µm and less than or equal to 5.0 µm. In this case, an effect of reduction in resistance by the addition of a boron compound and a sulfur compound is obtained. On the other hand, even when a boron compound and a sulfur compound are added to single particles having a D50 outside the above range or secondary particles formed by aggregation of a large number of primary particles, an effect of reduction in resistance is substantially not obtained. Based on the effect of reduction in resistance by the addition of a boron compound and a sulfur compound, the D50 of the lithium transition metal composite oxide is preferably greater than or equal to 0.7 µm and less than or equal to 3.5 µm, and more preferably greater than or equal to 0.8 µm and less than or equal to 3.0 µm.

As used herein, the term "D50" means the particle diameter at which the cumulative frequency in the volume-based particle size distribution reaches 50% from the smaller particle side. The particle size distribution of the lithium transition metal composite oxide can be measured using a laser diffraction particle size distribution measuring device (e.g., MT3000II, available from MicrotracBEL Corp.), with water used as a dispersion medium.

A crystallite size of the lithium transition metal composite oxide is greater than or equal to 370 Å and less than or equal to 1500 Å, preferably greater than or equal to 370 Å and less than or equal to 1000 Å, and more preferably greater than or equal to 370 Å and less than or equal to 750 Å. When the crystallite size is within the range, an effect of reducing resistance by addition of a boron compound and a sulfur compound can be obtained. The crystallite size is calculated from a full width at half maximum of a diffraction peak of a (104) plane in an X-ray diffraction pattern obtained by X-ray diffraction according to Scherrer equation represented by the following formula. In the following formula, s denotes a crystallite size, λ denotes a wavelength of X-rays, B denotes a full width at half maximum of the diffraction peak of the (104) plane, θ denotes a diffraction angle (rad), and K denotes a Scherrer constant. In the present specification, K is set to 0.9. $s = Kλ / Bcosθ$

The X-ray diffraction pattern is obtained by powder X-ray diffractometry under the following conditions using a powder X-ray diffractometer (RINT-TTR, manufactured by Rigaku Corporation, with a Cu-Kα radiation source):
Measurement range: 15 to 120°
Scan speed: 4°/min
Analysis range: 30 to 120°
Background: B-spline
Profile function: Split pseudo-Voigt function
Constraint conditions: Li(3a) + Ni(3a) = 1
   Ni(3a) + Ni(3b) = α (α is the proportion of Ni content in each case) ICSD No.: 98-009-4814

The BET specific surface area of the lithium transition metal composite oxide is, for example, greater than or equal to 0.5 m²/g and less than or equal to 4 m²/g, and more preferably greater than or equal to 0.9 m²/g and less than or equal to 3 m²/g. Since secondary particles including a large number of primary particles have voids inside the particles, the specific surface area is relatively large even when the particle size is large. On the other hand, since single particles have no voids inside the particles, the larger the particle size, the smaller the BET specific surface area becomes.

The BET specific surface area of the lithium transition metal composite oxide can be measured using a TriStar II 3020 manufactured by Shimadzu Corporation under the following conditions:
Number of measurement points: 11 points (P/P0: 0.05 to 0.3)
Warm free space: Measured
Equilibration interval: 5s
Analysis adsorptive: N2
analysis bath temperature: 77.3 K (liquid nitrogen temperature)
Cold Free Space: Measured
Low pressure done: None
Analysis method: BET multipoint method

The lithium transition metal composite oxide preferably has a layered rock-salt structure. When a boron compound and a sulfur compound are applied to a composite oxide having a layered rock-salt structure, the effect of reduction in resistance during high-potential charging becomes more remarkable. Examples of the layered rock-salt structure include a layered rock-salt structure belonging to the space group R-3m and a layered rock-salt structure belonging to the space group C2/m. Among these, from the viewpoint of high capacity and stability of the crystal structure, a layered rock-salt structure belonging to the space group R-3m is preferred.

The lithium transition metal composite oxide contains Ni and Mn as essential metal elements. The total content of Ni and Mn is greater than or equal to 80 mol% relative to the total molar amount of metal elements excluding Li. The proportion of Ni and Mn among the metal elements excluding Li may be greater than or equal to 80 mol%, and in this case, an effect of reduction in resistance by addition of a boron compound and a sulfur compound is obtained, and a high-capacity composite oxide can be obtained at relatively low cost. When the lithium transition metal composite oxide contains Ni, Mn, and Co, the total content thereof is preferably greater than or equal to 90 mol% relative to the total molar amount of metal elements excluding Li. The lithium transition metal composite oxide may contain only Ni and Mn as the metal elements excluding Li.

Ni is preferably contained in the largest amount among the metal elements other than Li constituting the lithium transition metal composite oxide. From the viewpoint of increasing capacity and the like, the content of Ni in the lithium transition metal composite oxide is preferably greater than or equal to 50 mol%, more preferably greater than or equal to 70 mol%, and particularly preferably greater than or equal to 75 mol% relative to the total molar amount of metal elements excluding Li. The upper limit of the Ni content is, for example, 95 mol%. Examples of preferred ranges of the Ni content include greater than or equal to 70 mol% and less than or equal to 95 mol%, greater than or equal to 75 mol% and less than or equal to 95 mol%, greater than or equal to 75 mol% and less than or equal to 90 mol%, and greater than or equal to 80 mol% and less than or equal to 90 mol%.

Mn is preferably contained in the second largest amount, next to Ni, among the metal elements other than Li constituting the lithium transition metal composite oxide. Mn stabilizes the crystal structure of the lithium transition metal composite oxide. The content of Mn in the lithium transition metal composite oxide is, for example, greater than or equal to 3 mol% and less than or equal to 50 mol%, or greater than or equal to 5 mol% and less than or equal to 30 mol%, relative to the total molar amount of metal elements excluding Li. The lithium transition metal composite oxide may contain Co in an amount smaller than that of Ni. The content of Co is preferably less than or equal to the content of Mn, and is, for example, less than or equal to 15 mol%, or less than or equal to 10 mol%, or less than or equal to 5 mol%, or less than or equal to 3 mol%.

The lithium transition metal composite oxide may further include a small amount of other elements in addition to Ni, Mn, and Co. Preferred other elements include at least one selected from the group consisting of Mg, Al, Ca, Nb, Sr, Zr, and W. These elements may be contained inside the particles of the lithium transition metal composite oxide or may be present on the particle surfaces. When these elements are included, for example, side reactions with the electrolyte are suppressed, and the durability of the battery is improved. The lithium transition metal composite oxide may contain these elements in an amount greater than or equal to 0.01 mol% and less than or equal to 5 mol% relative to the total amount of Ni and Mn. The content of the elements included in the positive electrode active material can be measured using an ICP emission spectrometer (for example, CIROS-120 manufactured by SPECTRO).

As described above, a predetermined amount of boron compounds is present on the particle surfaces of the lithium transition metal composite oxide. The content of the boron compounds is preferably greater than or equal to 0.005 mol% and less than or equal to 2.0 mol%, more preferably greater than or equal to 0.1 mol% and less than or equal to 1.5 mol%, and particularly preferably greater than or equal to 0.3 mol% and less than or equal to 1.0 mol%, relative to the total molar amount of metal elements excluding Li constituting the lithium transition metal composite oxide. When the content of the boron compounds is within this range, the effect of reduction in resistance becomes remarkable. When an amount of the boron compounds exceeding 2.0 mol% is added, the effect of reduction in resistance reaches a plateau, and it is assumed that problems such as a decrease in capacity may occur. Therefore, the content of the boron compounds is preferably less than or equal to 2.0 mol%.

The boron compounds are preferably present over a wide range of the particle surfaces of the lithium transition metal composite oxide without being localized on part of the particle surfaces. The boron compounds are uniformly present on the particle surfaces of the composite oxide. The boron compounds may be present in a film form on the particle surfaces of the composite oxide or may be present in a granular form. The boron compounds may also form solid solution in the composite oxide and be bonded via sulfur compounds and oxygen. The average particle diameter of the boron compounds on the particle surfaces of the lithium transition metal composite oxide is, for example, greater than or equal to 1 nm and less than or equal to 500 nm, or greater than or equal to 2 nm and 100 nm, and is smaller than the average particle diameter of the sulfur compounds. The average particle diameter of the boron compounds can be measured in the same manner as the average particle diameter of the sulfur compounds described later.

The boron compounds are preferably boron oxide, boric acid, or borates. Preferred borates include lithium salts, sodium salts, and potassium salts. The boron compounds are, for example, at least one selected from the group consisting of boron oxide, boric acid, and borates. The boric acid may be metaboric acid. When at least one selected from them is used, the effect of suppressing an increase in resistance becomes more remarkable.

The boron compounds are preferably present on the particle surfaces of the lithium transition metal composite oxide and in a region at a depth of less than 100 nm from the surfaces, and may be substantially present only in a region at a depth of less than 100 nm from the particle surfaces. Since the boron compounds are considered to suppress an increase in resistance by being present on or in the vicinity of the particle surfaces of the composite oxide, in this case, the increase in resistance can be efficiently suppressed. The content of the boron compounds increases as the position approaches the particle surfaces from the particle interior, and substantially the entire amount of the boron compounds may be present only in a region at a depth less than or equal to 50 nm from the particle surfaces.

The elements present on or in the vicinity of the particle surfaces of the lithium transition metal composite oxide can be confirmed by X-ray photoelectron spectroscopy (XPS). ESCA5600 manufactured by Ulvac Phi, Inc. can be used for the XPS measurement. The depth from the particle surfaces obtained in the XPS measurement of the positive electrode active material is a value converted based on SiO₂. The obtained data are used after smoothing (SG9) and correcting the C1s to 284.8 eV.

The measurement conditions of the XPS are as follows.
X-ray source: Mg-conventional
   (fixed target-type X-ray tube, 1253.6 eV)
Neutralization: electron gun only
Etching condition: Ar ion gun
   Accelerating voltage: 4 kV, 2.3 nm/min (in terms of SiO₂)
Measurement condition: pass energy, 58.70 eV
   Step: 0.25 eV (outermost surface, depth direction)

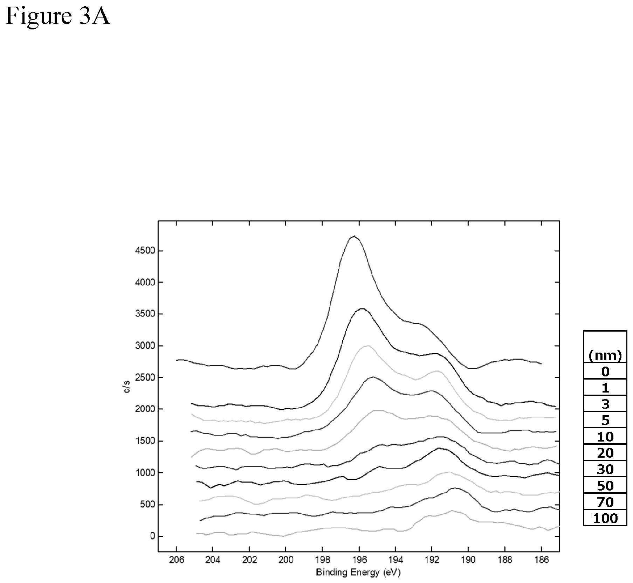

In the photoelectron spectrum (XPS spectrum) obtained by XPS measurement of the positive electrode active material, as shown in FIG. 3A described later, a peak derived from B having a binding energy in a range of greater than or equal to 194 V and less than or equal to 198 eV is present on particle surfaces of the lithium transition metal composite oxide and in a region at a depth of less than 100 nm from the surfaces. The intensity of the peak derived from B increases as the position approaches the particle surfaces from the particle interior. The peak derived from B may be present only in a region at a depth less than 100 nm from the particle surfaces, or only in a region at a depth less than or equal to 50 nm from the particle surfaces, in terms of SiO₂ conversion. Alternatively, the peak derived from B may be present only in a region at a depth less than or equal to 30 nm, or only in a region at a depth less than or equal to 20 nm, from the particle surfaces, in terms of SiO₂ conversion. In the particle surfaces of the lithium transition metal composite oxide and in a region at a depth less than 100 nm from the surfaces, a peak derived from B having a binding energy in a range of greater than or equal to 194 V and less than or equal to 198 eV may be present, and in addition to the peak derived from B, another peak derived from B having a binding energy in a lower energy range (for example, greater than or equal to 190 eV and less than or equal to 193 eV) may also be present. A further peak derived from B may also be present.

A predetermined amount of sulfur compounds is present on the particle surfaces of the lithium transition metal composite oxide. The sulfur compounds may be any compounds including sulfur, and are preferably sulfur-containing oxidized species, and more preferably compounds including a functional group represented by formula 1.

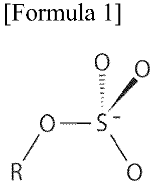

The functional group represented by formula 1 is generally referred to as a sulfate ester group. In the formula, R is an alkyl group having less than or equal to 5 carbon atoms, and is preferably an alkyl group having less than or equal to 3 carbon atoms. By allowing the sulfur compounds together with the boron compounds to be present in a predetermined amount on the particle surfaces of the composite oxide, an increase in the resistance of the positive electrode 11 during high-potential charging, particularly in a high SOC region, is effectively suppressed.

The content of the sulfur compounds is preferably greater than or equal to 0.005 mol% and less than or equal to 2.0 mol%, more preferably greater than or equal to 0.1 mol% and less than or equal to 1.5 mol%, and particularly preferably greater than or equal to 0.3 mol% and less than or equal to 1.0 mol%, relative to the total molar amount of metal elements excluding Li constituting the lithium transition metal composite oxide. When the content of the sulfur compounds is within this range, the effect of reduction in resistance becomes remarkable. When an amount of the sulfur compounds exceeding 2.0 mol% is added, the effect of reduction in resistance reaches a plateau, and it is assumed that problems such as a decrease in capacity may occur. Therefore, the content of the sulfur compounds is preferably less than or equal to 2.0 mol%.

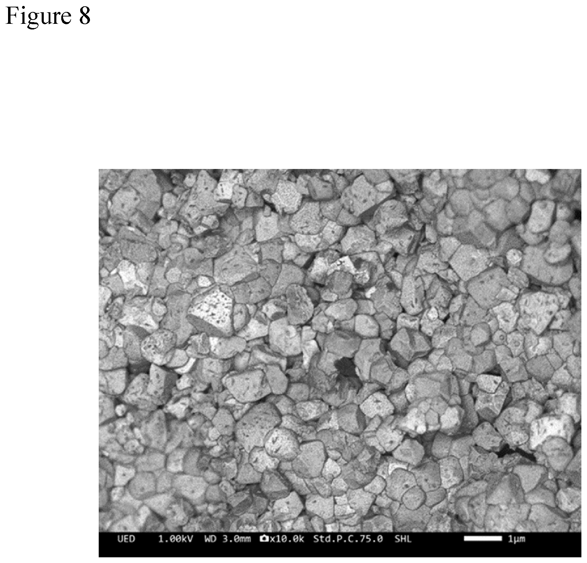

The sulfur compounds are preferably present over a wide range of the particle surfaces of the lithium transition metal composite oxide without being localized on part of the particle surfaces. As shown in FIG. 8 described later, the sulfur compounds are present in a granular form and are uniformly dispersed on the particle surfaces of the composite oxide. By the sulfur compounds being present in a granular form, the particle surfaces of the lithium transition metal composite oxide and the electrolyte can appropriately contact each other, whereby the effect of reduction in resistance is readily obtained. The average particle diameter of the sulfur compounds is, for example, preferably greater than or equal to 0.005 µm and less than or equal to 0.5 µm, more preferably greater than or equal to 0.007 µm and less than or equal to 0.2 µm, and particularly preferably greater than or equal to 0.01 µm and less than or equal to 0.1 µm. By using sulfur compounds having an average particle diameter within this range, the effect of reduction in resistance by the addition of the sulfur compounds becomes more remarkable. The average particle diameter of the sulfur compounds is determined by observing the particle surfaces of the composite oxide using a scanning electron microscope (SEM). From an SEM image of the particle surfaces, 100 sulfur compounds are arbitrarily selected, the diameters of circumscribed circles are measured, and the average of the measured values is calculated to obtain the average particle diameter of the sulfur compounds.

The measurement conditions of the SEM are as follows.
Apparatus: FE-SEM, manufactured by JEOL Ltd.
Detector: UED (upper electron detector)
Acceleration voltage: 1 kV
WD: 3 mm

The sulfur compounds are preferably substantially present only on the particle surfaces of the lithium transition metal composite oxide and in a region at a depth of less than 100 nm from the surfaces. In other words, the sulfur compounds are preferably substantially absent in the particle interior at a depth of greater than or equal to 100 nm from the particle surfaces. Since the sulfur compounds are considered to suppress an increase in resistance by being present on or in the vicinity of the particle surfaces of the composite oxide, in this case, the increase in resistance can be efficiently suppressed. The content of the sulfur compounds increases as the position approaches the particle surfaces from the particle interior, and substantially the entire amount of the sulfur compounds may be present only in a region at a depth less than or equal to 50 nm from the particle surfaces.

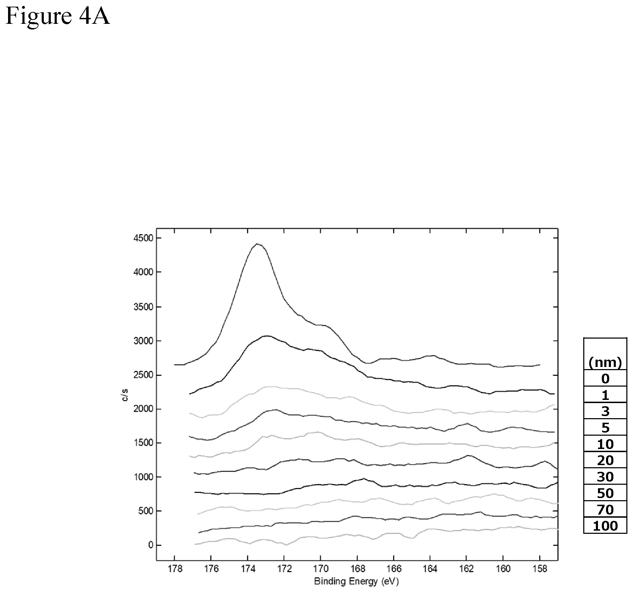

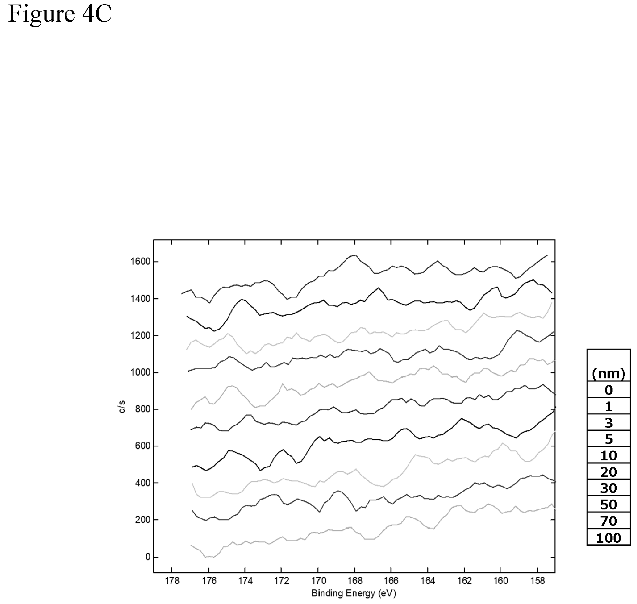

In the XPS spectrum of the positive electrode active material, as shown in FIG. 4A described later, a peak derived from S having a binding energy in a range of greater than or equal to 172 eV and less than or equal to 174 eV is present on particle surfaces of the lithium transition metal composite oxide and in a region at a depth of less than 100 nm from the surfaces. The intensity of the peak derived from S increases as the position approaches the particle surfaces from the particle interior. The peak derived from S may be substantially present only in a region at a depth less than 100 nm from the particle surfaces, or only in a region at a depth less than or equal to 50 nm from the particle surfaces, in terms of SiO₂ conversion. Alternatively, the peak derived from S may be present only in a region at a depth less than or equal to 30 nm, or only in a region at a depth less than or equal to 20 nm, from the particle surfaces, in terms of SiO₂ conversion. On the other hand, as shown in FIG. 8, when the sulfur compounds are not contained, no peak is observed. In the particle surfaces of the lithium transition metal composite oxide and in a region at a depth less than 100 nm from the surfaces, a peak derived from S having a binding energy in a range of greater than or equal to 172 eV and less than or equal to 174 eV may be present, and in addition to the peak derived from S, another peak derived from S having a binding energy in a lower energy range (for example, greater than or equal to 168 eV and less than or equal to 171 eV) may also be present. A further peak derived from S may also be present.

Since sulfates are used as coprecipitation raw material in synthesis of the lithium transition metal composite oxide, S may be detected even at a depth greater than 100 nm from the particle surfaces of the composite oxide. However, even when the raw materials include about 2000 ppm of sulfate ions, no peak can be confirmed in the XPS spectrum. Similarly, although Na is included in the raw materials at about 80 ppm, it is not detected as a peak in the XPS spectrum at a depth greater than 100 nm from the particle surfaces. The XPS spectrum can be used for qualitative identification of elements present on the particle surfaces.

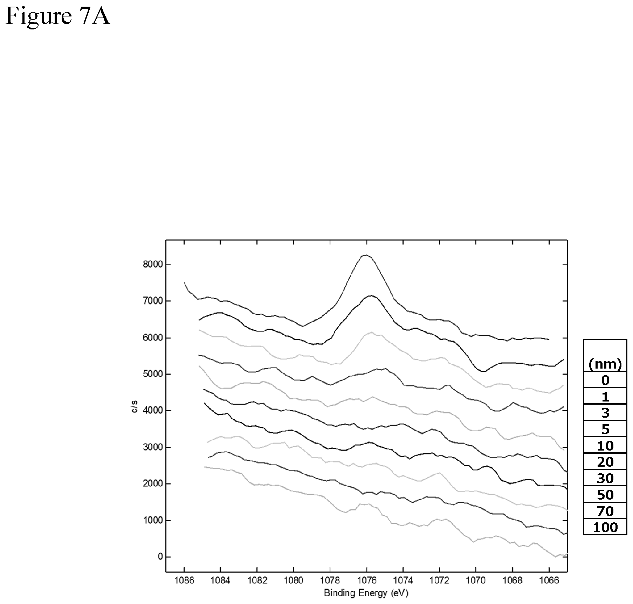

At least one of the group consisting of Na and K may further be present on the particle surfaces of the lithium transition metal composite oxide. At least one of the group consisting of Na and K is present only on the particle surfaces of the lithium transition metal composite oxide and in a region at a depth of less than 100 nm from the surfaces, or only in a region at a depth less than or equal to 50 nm from the particle surfaces. As shown in FIG. 7A described later, in the XPS spectrum of the positive electrode active material, a peak derived from Na having a binding energy in a range of greater than or equal to 1074 eV and less than or equal to 1077 eV is present on the particle surfaces of the lithium transition metal composite oxide and in a region at a depth of less than 100 nm from the surfaces. The peak derived from Na may be present only in a region at a depth of less than 100 nm from the particle surfaces in terms of SiO₂ conversion, or only in a region at a depth less than or equal to 50 nm, or less than or equal to 30 nm, or less than or equal to 20 nm from the particle surfaces. In the particle surfaces of the lithium transition metal composite oxide and in a region at a depth of less than 100 nm from the surfaces, a peak derived from Na having a binding energy in a range of greater than or equal to 1074 eV and less than or equal to 1077 eV may be present, and in addition to the peak derived from Na, another peak derived from Na having a binding energy in a lower energy range may be present. A further peak derived from Na may also be present.

The sulfur compounds are preferably salts of sulfate esters having less than or equal to 5 carbon atoms, particularly lithium salts, sodium salts, and potassium salts. Preferred sulfur compounds include at least one selected from the group consisting of lithium methyl sulfate, lithium ethyl sulfate, lithium propyl sulfate, sodium methyl sulfate, sodium ethyl sulfate, sodium propyl sulfate, potassium methyl sulfate, potassium ethyl sulfate, and potassium propyl sulfate. When at least one selected from these is used, the effect of suppressing an increase in resistance becomes more remarkable.

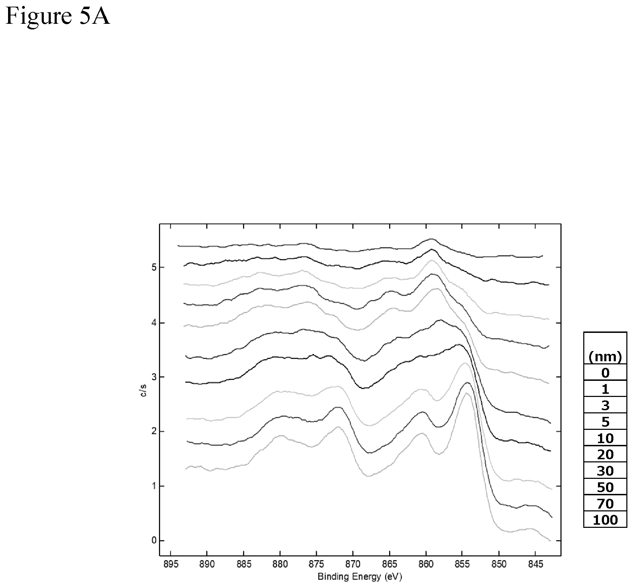

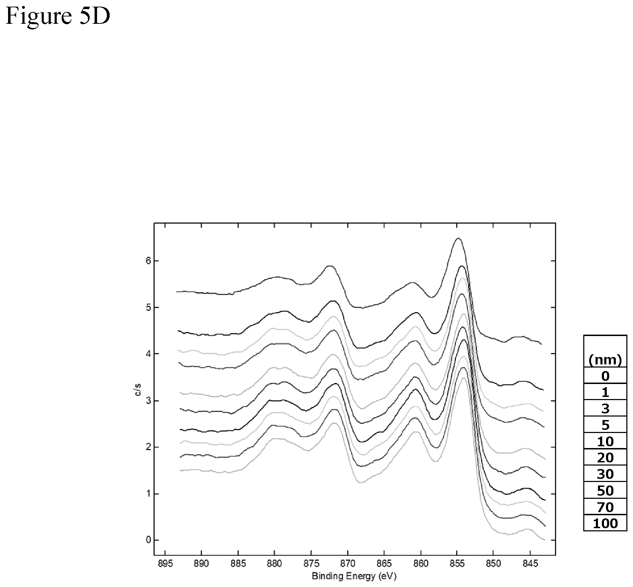

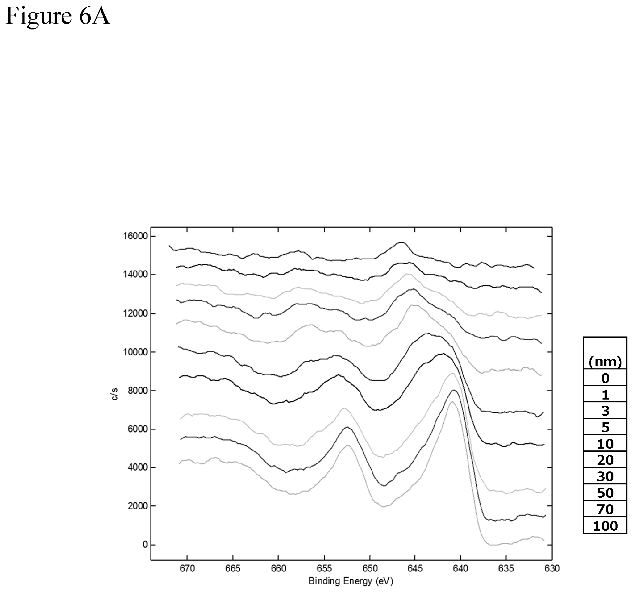

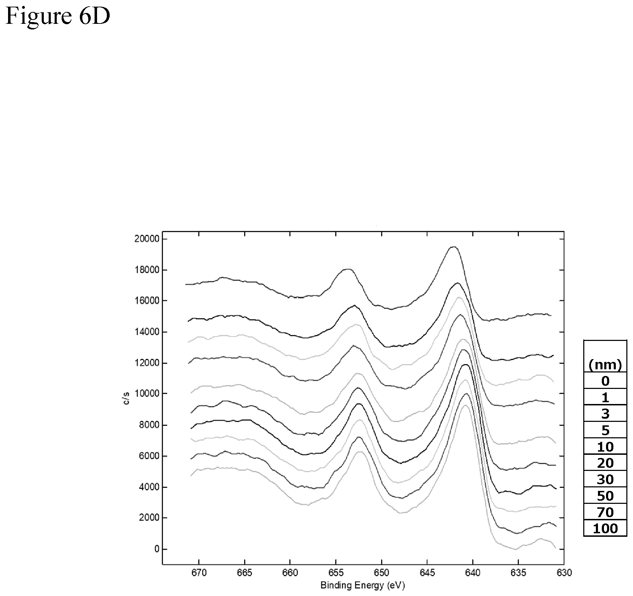

As shown in FIGS. 5A and 6A described later, the XPS spectrum of the positive electrode active material shows a peak derived from Ni having a binding energy in a range of greater than or equal to 858 eV and less than or equal to 862 eV and a peak derived from Mn having a binding energy in a range of greater than or equal to 645 eV and less than or equal to 649 eV on the particle surfaces of the lithium transition metal composite oxide and in a region at a depth of less than 50 nm from the surfaces. The peaks derived from Ni and Mn present in the respective ranges may be present only in a region at a depth less than or equal to 30 nm, or less than or equal to 20 nm, or less than or equal to 10 nm from the particle surfaces of the composite oxide. For example, the peak derived from Ni having a binding energy in a range of greater than or equal to 853 eV and less than or equal to 856 eV is present in a region at a depth greater than 50 nm from the particle surfaces of the composite oxide. In addition, the peak derived from Mn having a binding energy in a range of greater than or equal to 640 eV and less than or equal to 643 eV is present in a region at a depth greater than 50 nm from the particle surfaces of the composite oxide. In the particle surfaces of the lithium transition metal composite oxide and in a region at a depth of less than 50 nm from the surfaces, it is sufficient that a peak derived from Ni having a binding energy in a range of greater than or equal to 858 eV and less than or equal to 862 eV is present, and in addition to the peak derived from Ni, another peak derived from Ni having a binding energy in a lower energy range (for example, greater than or equal to 853 eV and less than or equal to 856 eV) may be present. A further peak derived from Ni may also be present. Similarly, in the particle surfaces of the lithium transition metal composite oxide and in a region at a depth of less than 50 nm from the surfaces, it is sufficient that a peak derived from Mn having a binding energy in a range of greater than or equal to 645 eV and less than or equal to 649 eV is present, and in addition to the peak derived from Mn, another peak derived from Mn having a binding energy in a lower energy range (for example, greater than or equal to 640 eV and less than or equal to 643 eV) may be present. A further peak derived from Mn may also be present.

That is, on the particle surfaces of the lithium transition metal composite oxide and in a region at a depth of less than 50 nm from the surfaces, the peaks derived from Ni and Mn are greatly shifted to a higher energy side compared with those in the particle interior. This large peak shift indicates that the Ni and Mn on the particle surfaces are in a state in which the binding energies of electrons in the 2p orbitals are higher than those of the Ni and Mn in the particle interior, or are in a higher oxidation-state condition. By using a positive electrode active material exhibiting such a peak shift, that is, a positive electrode active material in which the Ni and Mn on the particle surfaces are highly active, the effect of suppressing an increase in resistance is considered to become remarkable. In addition, the peaks derived from Ni and Mn are gradually shifted to a higher energy side toward the particle surfaces in a region at a depth greater than 10 nm and less than 50 nm from the particle surfaces of the composite oxide.

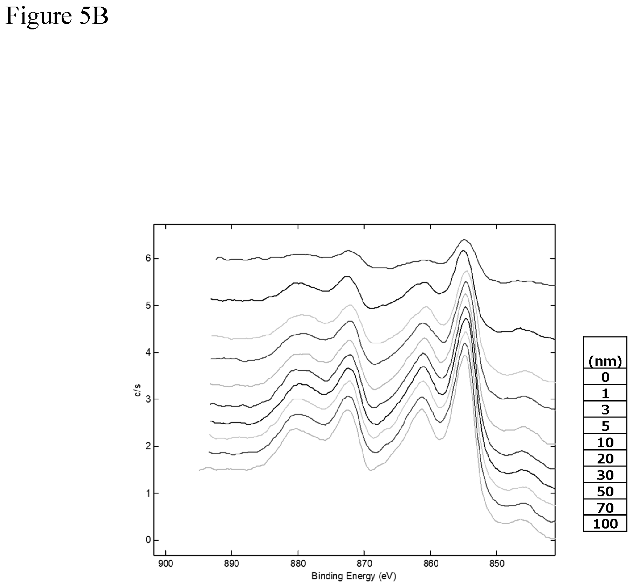

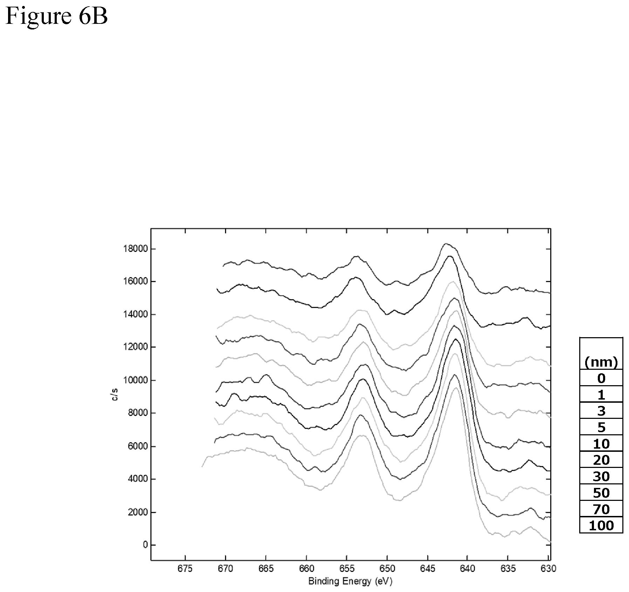

The large shifts of the peaks derived from Ni and Mn appear specifically when B and S coexist on the particle surfaces of the lithium transition metal composite oxide. FIGS. 5B to 5D and FIGS. 6B to 6D show XPS spectra in cases where neither B nor S, or only one of them, is present on the particle surfaces of the lithium transition metal composite oxide. In such cases, the large peak shifts as shown in FIGS. 5A and 6A are not observed.

That is, by mixing a composite oxide, a boron compound, and a sulfur compound and performing heat treatment at a predetermined temperature, the states of Ni and Mn on the particle surfaces of the composite oxide are considered to change and become highly active. The effects of the boron compound and the sulfur compound are considered effects resulting from the bonding between the boron compound and an oxo acid, and as the boron compound, a boron oxide is preferably used, with boric acid and borates being particularly preferred. As the oxo acid, titanic acid, molybdic acid, phosphoric acid, and alkali salts thereof are preferably used. It is considered that a positive electrode active material exhibiting a large peak shift can be obtained by the presence of these oxo acids on the particle surfaces of the composite oxide or by these bonding with Ni and Mn.

The positive electrode active material may include, within a range that does not impair the scope of the present disclosure, a positive electrode active material other than the lithium transition metal composite oxide of the present embodiment that exhibits the above peak shifts of Ni and Mn. In the non-aqueous electrolyte secondary battery 10, for example, a plurality of positive electrode active materials can be used depending on required battery performance and the like. Even when other composite oxides, such as composite oxides that do not exhibit the above peak shifts of Ni and Mn or composite oxides in which the total amount of Ni and Mn is less than 80 mol%, are used in combination as the positive electrode active material, the above effect of reduction in resistance can be obtained according to the content of the positive electrode active material of the present embodiment.

Hereinafter, an example of a method for producing the positive electrode active material will be described. The method for producing the positive electrode active material includes, for example, a synthesis step of the lithium transition metal composite oxide, a washing step, a drying step, a disintegration step, and an addition step of a boron compound and a sulfur compound.

In the synthesis step of the lithium transition metal composite oxide, a metal hydroxide containing Ni and Mn in a total amount of 80 mol% or more relative to the total molar amount of metal elements excluding Li is mixed with a Li compound, and the mixture is fired to obtain the lithium transition metal composite oxide. Examples of the Li compound include Li₂CO₃, LiOH, Li₂O₂, Li₂O, LiNO₃, LiNO₂, Li₂SO₄, LiOH·H₂O, LiH, and LiF.

The metal hydroxide is obtained, for example, by dropping an alkaline solution such as a sodium hydroxide solution into a solution of metal salts containing Ni, Mn, and an optional element while stirring, adjusting the pH to an alkaline range (for example, greater than or equal to 8.5 and less than or equal to 12.5), and precipitating (coprecipitating) the metal hydroxide. Instead of the metal hydroxide, a metal oxide obtained by heat-treating the metal hydroxide may be used. Since a smaller particle size of the metal hydroxide makes it easier for primary particles to grow and for single particles to be obtained, the D50 of the metal hydroxide is preferably less than or equal to 7 µm, and more preferably less than or equal to 5 µm.

The metal hydroxide and the Li compound are mixed, for example, at a ratio such that the molar ratio of the metal elements excluding Li to Li becomes 1:0.98 to 1:1.05. When mixing the metal hydroxide and the Li compound, Mg compounds, Al compounds, Ca compounds, Nb compounds, Sr compounds, Zr compounds, W compounds, and the like may be added. These compounds are, for example, oxides, hydroxides, or carbonates, and may also be composite compounds including other metal elements such as Li.

A mixture of the metal hydroxide and the Li compound and the like is fired, for example, under an oxygen atmosphere (under a gas flow having an oxygen concentration of greater than or equal to 80%). The firing step may involve multistage firing. As an example of firing conditions, the temperature rising rate in a temperature range of greater than or equal to 450°C and less than or equal to 680°C is set to greater than or equal to 1.0°C/min and less than or equal to 5.5°C/min, and the maximum temperature reached is set to greater than or equal to 850°C and less than or equal to 1100°C. The temperature rising rate from 680°C to the maximum temperature reached may be set to greater than or equal to 0.1°C/min and less than or equal to 3.5°C/min. The holding time at the maximum temperature reached may be greater than or equal to 1 hour and less than or equal to 30 hours. By adjusting the firing conditions, single particles can be produced and their particle size can be adjusted. For example, when the maximum temperature reached is increased, single particles are more easily obtained and their particle size tends to become larger.

In the washing step, the lithium transition metal composite oxide obtained in the synthesis step is washed with water and dehydrated to obtain a cake-like composition. The washing and dehydration can be performed under known methods and conditions. Mg compounds, Al compounds, Ca compounds, Nb compounds, Sr compounds, Zr compounds, W compounds, and the like may be added to the cake-like composition. In the drying step, the cake-like composition obtained in the washing step is dried to obtain a powder-like composition. The drying step may be performed under a vacuum atmosphere. For example, the drying temperature is greater than or equal to 150°C and less than or equal to 400°C, and the drying time is greater than or equal to 0.5 hours and less than or equal to 15 hours. The washing step may be omitted.

The powder-like composition obtained in the drying step is disintegrated using a pulverizer such as a jet mill. The disintegration using the jet mill can be performed, for example, under the following conditions using a PJM-80 manufactured by Nippon Pneumatic Mfg. Co., Ltd. The disintegration step may be omitted.
Consumption amount of compressed air: 0.5 Nm³/min
Supply gas pressure: 0.53 MPa
Processing rate: 2000 g/hour

By adding a boron compound and a sulfur compound to the disintegrated lithium transition metal composite oxide and mixing them, and then performing heat treatment, a positive electrode active material in which the boron compound and the sulfur compound adhere to the particle surfaces of the composite oxide can be obtained. For example, after dry-mixing the lithium transition metal composite oxide, the boron compound, and the sulfur compound, heat treatment is performed at a temperature of greater than or equal to 250°C and less than or equal to 600°C for greater than or equal to 2 hours and less than or equal to 5 hours. The boron compound and the sulfur compound are fixed to the particle surfaces of the composite oxide by this heat treatment. For the dry mixing, a mixer such as a planetary mixer, a rocking mill, or a high-speed mixer can be used. The heat treatment is performed under an oxygen atmosphere, but may also be performed in air.

After adding the boron compound and performing heat treatment, the sulfur compound may be added. However, the boron compound and the sulfur compound are preferably mixed simultaneously and subjected to heat treatment. In this case, the effect of reduction in resistance becomes more pronounced. Although it is conceivable to add the boron compound and the sulfur compound to the lithium transition metal composite oxide before firing (as raw materials), the surface state of the particles of the composite oxide obtained in such a case differs from the surface state of the particles of the composite oxide according to the present disclosure, and therefore it is difficult to obtain a positive electrode active material having excellent capacity retention after charge-discharge cycle.

### [Negative Electrode]

The negative electrode 12 has a negative electrode core and a negative electrode mixture layer disposed on the negative electrode core. As the negative electrode core, a foil of a metal that is stable in the potential range of the negative electrode 12, such as copper, a copper alloy, stainless steel, nickel, or a nickel alloy, or a film having such a metal disposed on its surface, can be used. The negative electrode mixture layer includes a negative electrode active material and a binder, and is preferably provided on both surfaces of the negative electrode core. The negative electrode 12 can be produced, for example, by applying a negative electrode mixture slurry including a negative electrode active material and a binder onto the negative electrode core, drying the coating, and compressing the dried coating to form the negative electrode mixture layer on both the surfaces of the negative electrode core. As the negative electrode 12, a metal lithium foil may be used. Alternatively, the negative electrode 12 may be constituted only of the negative electrode core, and metal lithium may be deposited on the surface of the core during charging of the battery.

As the negative electrode active material included, any material capable of reversibly intercalating and releasing lithium ions may be used without particular limitation, and generally, carbon materials such as graphite are used. As the negative electrode active material, elements such as Si and Sn that alloy with Li, and materials containing such elements, may be used. Among them, silicon-containing materials including Si are preferred. As the negative electrode active material, materials such as lithium titanate, which have a charge-discharge potential with respect to metal lithium that is higher than that of carbon materials, may also be used. The negative electrode active material may be used singly or in combination of a plurality of types thereof.

The carbon material that functions as a negative electrode active material is, for example, at least one selected from the group consisting of natural graphite, artificial graphite, soft carbon, and hard carbon. Among them, the carbon material to be used is preferably artificial graphite such as massive artificial graphite (MAG) and graphitized mesophase-carbon microbeads (MCMBs), natural graphite such as flake graphite, massive graphite, and amorphous graphite, or a mixture thereof. Silicon-containing materials that function as a negative electrode active material include, for example, a silicon alloy, a silicon compound, and a composite material including Si. A preferred silicon-containing material is composite particles including an ion-conductive phase and an Si phase dispersed in the ion-conductive phase.

As the binder contained in the negative electrode mixture layer, fluororesins, olefin-based resins, PAN, polyimide, polyamide, acrylic resins, and the like can be used, similarly to the case of the positive electrode 11, and polyvinyl acetate, styrene-butadiene rubber (SBR), and the like may also be used. Among them, it is preferable to use SBR. The binder may be used singly or in combination of a plurality of types thereof. The negative electrode mixture layer preferably includes CMC or a salt thereof, polyacrylic acid (PAA) or a salt thereof, polyvinyl alcohol (PVA), and the like. These function as thickeners in the negative electrode mixture slurry. The content of the binder is not particularly limited, but is, for example, greater than or equal to 0.1 mass% and less than or equal to 5 mass% relative to a mass of the negative electrode mixture layer. The negative electrode mixture layer may include a conductive agent such as CNT.

### [Separator]

As the separator 13, a porous sheet having ion permeability and insulation properties may be used. Specific examples of the porous sheet include microporous films, woven fabrics, and nonwoven fabrics. Preferred materials for the separator 13 include polyolefins such as polyethylene and polypropylene, and cellulose. The separator 13 may have a single-layer structure or a multilayer structure. Further, a heat-resistant resin layer such as an aramid resin layer may be formed on the surface of the separator 13.

A filler layer including an inorganic filler may be formed at the interface between the separator 13 and at least one of the group consisting of the positive electrode 11 and the negative electrode 12. Examples of the inorganic filler include oxides including metal elements such as Ti, Al, Si, and Mg, and phosphate compounds. The filler layer can be formed by applying a slurry including the filler to the surface of the positive electrode 11, the negative electrode 12, or the separator 13.

### [Non-Aqueous Electrolyte]

The non-aqueous electrolyte has ion conductivity (for example, lithium ion conductivity). The non-aqueous electrolyte may be a liquid electrolyte (electrolyte solution) or a solid electrolyte.

The electrolyte solution includes, for example, a non-aqueous solvent and an electrolyte salt dissolved in the non-aqueous solvent. For the non-aqueous solvent, esters, ethers, nitriles such as acetonitrile, amides such as dimethylformamide, and a mixed solvent of two or more types thereof can be used, for example. The non-aqueous solvent may contain a halogen-substituted product in which hydrogen of these solvents is at least partially replaced with a halogen atom such as fluorine. Examples of the halogen-substituted product include fluorinated cyclic carbonate esters such as fluoroethylene carbonate (FEC), fluorinated linear carbonate esters, and fluorinated linear carboxylic acid esters such as methyl fluoropropionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, a lower aliphatic carboxylic acid lithium salt, LiCl, LiBr, LiI, a phosphate salt, a borate salt, and an imide salt. Examples of the phosphate salt include lithium difluorophosphate (LiPO₂F₂), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of the imide salt include lithium bis(fluorosulfonyl)imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). Among these, LiPF₆ is preferably used from the standpoint of ionic conductivity and electrochemical stability. The concentration of the lithium salt may be, for example, less than or equal to 4 mol per liter of non-aqueous solvent, less than or equal to 3 mol, preferably less than or equal to 1.8 mol, and more preferably greater than or equal to 0.8 mol and less than or equal to 1.8 mol.

The non-aqueous electrolyte may contain additives. Examples of the additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of such an unsaturated cyclic carbonate ester include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of a plurality of carboxylic acid molecules, but is preferably an acid anhydride of a polycarboxylic acid. Examples of the acid anhydride of a polycarboxylic acid include succinic anhydride, maleic anhydride, and phthalic anhydride.

Examples of the phenolic compounds include phenol and hydroxytoluene. Examples of the benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanate methyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in an all-solid-state lithium-ion secondary battery, such as oxide-based solid electrolytes, sulfide-based solid electrolytes, and halide-based solid electrolytes, may be used. The polymer electrolyte includes, for example, a lithium salt and a matrix polymer, or a non-aqueous solvent, a lithium salt, and a matrix polymer. As the matrix polymer, polymer materials capable of absorbing the non-aqueous solvent and forming a gel may be used. Examples of the polymer materials include fluororesins, acrylic resins, and polyether resins.

### EXAMPLES

Hereinafter, the present disclosure will be described in more detail with reference to Experimental Examples, but the present disclosure is not limited to these Experimental Examples.

### <Experimental Example A1>

### [Production of Positive Electrode Active Material]

LiOH and a Ni_{0.8}Mn_{0.2}(OH)₂ powder obtained by a coprecipitation method were mixed so that a molar ratio of Li to a total amount of Ni and Mn became 1.05:1 to obtain a mixture. This mixture was subjected to two-stage firing under an oxygen stream having an oxygen concentration of greater than or equal to 90% (at a flow rate of greater than or equal to 0.15 L/min and less than or equal to 0.2 L/min per 1 L of furnace volume). Specifically, the mixture was heated from room temperature to 670°C over 5 hours, and then from 650°C to 880°C over 2 hours. Thereafter, the temperature was maintained at 880°C for 3 hours to obtain a lithium transition metal composite oxide.

The obtained lithium transition metal composite oxide was washed with water to remove excess lithium, and the washed composite oxide was dried and then disintegrated using a jet mill. Sodium ethyl sulfate was added to and mixed with the disintegrated lithium transition metal composite oxide, followed by heat treatment at 300°C for 3 hours in an oxygen atmosphere (flow rate: 4 L/min) to obtain a positive electrode active material in which sodium ethyl sulfate adhered to particle surfaces of the lithium transition metal composite oxide. The amount of sodium ethyl sulfate added was adjusted so that the content of sodium ethyl sulfate became 0.7 mol% relative to a total molar amount of metal elements excluding Li in the composite oxide.

By observation of the positive electrode active material using SEM, it was confirmed that most of the particles of the lithium transition metal composite oxide were single particles each composed of one primary particle. When the D50 and crystallite size of the lithium transition metal composite oxide (positive electrode active material) were measured by the above method, the D50 was 1.1 µm, the crystallite size was 459 Å, and the BET specific surface area was 1.9 m²/g. The crystal structure of the lithium transition metal composite oxide was a layered rock-salt structure belonging to the space group R-3m. It was confirmed that particles of sodium ethyl sulfate were dispersed on particle surfaces of the composite oxide. It was also confirmed that the XPS spectrum of the positive electrode active material had peaks derived from S and Na on particle surfaces of the composite oxide and in a region at a depth shallower than 100 nm from the surfaces.

### [Production of Test Cell]

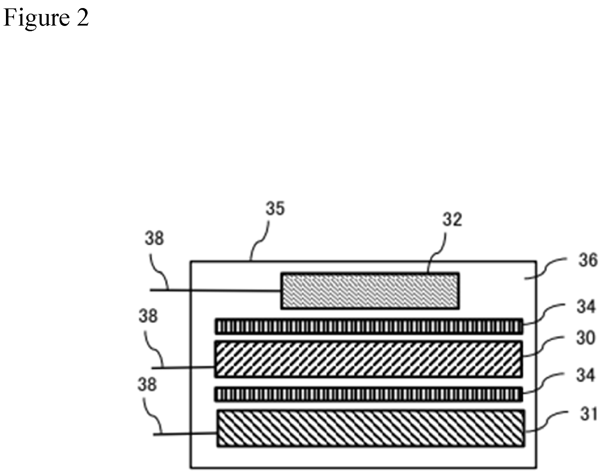

A test cell shown in FIG. 2 was produced according to the following procedure. The working electrode 30 is a positive electrode using the positive electrode active material. The positive electrode active material, acetylene black, and polyvinylidene fluoride were mixed at a mass ratio of 80:10:10 to prepare a positive electrode mixture slurry using N-methyl-2-pyrrolidone as a dispersion medium. The slurry was applied onto an aluminum foil serving as a positive electrode core, and the resulting coating was dried in vacuum at 110°C to obtain a working electrode 30.

Under dry air with a dew point of less than or equal to -50°C, an electrode group was prepared by interposing a separator 34 between the working electrode 30, the counter electrode 31 (negative electrode), and the reference electrode 32, each of which had an electrode lead 38 attached thereto, and the electrode group was housed in an outer case 35. Thereafter, an electrolyte solution 36 was injected into the outer case 35, and the outer case 35 was sealed to obtain a test cell.

The details of each component of the test cell are as follows.
Counter electrode 31: lithium metal
Reference electrode 32: lithium metal
Separator 34: polyethylene separator
Non-aqueous electrolyte: non-aqueous solvent obtained by mixing ethylene carbonate (EC) and ethyl methyl carbonate (EMC) at a volume ratio of 3:7 (25°C), in which LiPF₆ was dissolved as an electrolyte salt so that the concentration was 1.0 mol/L.

For the test cell of Experimental Example A1, the following performance evaluations were conducted, and the evaluation results together with compositions and addition amounts of the additives were shown in Table 1-1.

### [Evaluation of Charge-Discharge Efficiency and Capacity Retention Rate]

The test cell was charged to 4.5 V (vs. Li metal) at a constant current of 0.2 C under a temperature environment of 25°C and then charged to 0.02 C at a constant voltage of 4.5 V. Thereafter, the test cell was discharged to 2.5 V at a constant current of 0.1 C. The charge capacity and the discharge capacity at this time were measured, and the charge-discharge efficiency was calculated by dividing the discharge capacity by the charge capacity. From the second cycle onward, the current value during discharge was changed to 0.2 C, and this charge-discharge operation was repeated for 30 cycles. The capacity retention rate was calculated by dividing the discharge capacity in the 30th cycle by the discharge capacity in the first cycle.

### [Evaluation of IV Resistance]

For the test cell after the above initial charge-discharge and after the charge-discharge operation of 30 cycles, the I-V resistance (internal resistance) at SOCs of 10%, 50%, and 100% (4.45 V) was measured. The measurement was performed by placing the test cell in each SOC state, resting it for 15 minutes, defining the voltage at that time as V0, and defining the voltage drop during a 10-second discharge as ΔV, and the I-V resistance was calculated from a straight line obtained from each current value and each ΔV.

### <Experimental Example A2>

A positive electrode active material and a test cell were produced in the same manner as in Experimental Example A1, except that sodium methyl sulfate was used in place of sodium ethyl sulfate and the addition amount thereof was adjusted to 0.5 mol%, and the disintegration step of the composite oxide was omitted, and the performance evaluation was conducted. The evaluation results are shown in Table 1-1 together with the composition and addition amount of the additive (the same applies to Experimental Examples B1 to B23). The D50 of the positive electrode active material was 4.9 µm, and the BET specific surface area was 1.1 m²/g. It was confirmed that particles (average particle diameter: 0.09 µm) of sodium methyl sulfate were dispersed on particle surfaces of the composite oxide. It was confirmed that the XPS spectrum of the positive electrode active material had peaks derived from S and Na on particle surfaces of the composite oxide and in a region at a depth shallower than 100 nm from the surfaces.

### <Experimental Examples B1 to B23>

A positive electrode active material and a test cell were produced in the same manner as in Experimental Example A2, except that the compounds shown in Table 1-1 were used in place of sodium methyl sulfate, and the performance evaluation was conducted. Note that the presence or absence of the disintegration step of the composite oxide is as shown in Table 1-1.

### <Experimental Examples B24 to B41>

A positive electrode active material and a test cell were produced in the same manner as in Experimental Example A1, except that the compounds shown in Table 1-2 were used in place of sodium ethyl sulfate, and the addition amounts thereof were adjusted to those shown in Table 1-2, and the performance evaluation was conducted. The evaluation results are shown in Table 1-2. Note that the presence or absence of the disintegration step of the composite oxide is as shown in Table 1-2.

### <Experimental Example B42>

A positive electrode active material and a test cell were produced in the same manner as in Experimental Example A1, except that the step of adding sodium ethyl sulfate was omitted, and the performance evaluation was conducted.

**[Table 1-1]**

| | Additive | Addition amount (mol%) | Disintegration step | Charge capacity | Discharge capacity | Efficiency (%) | Retention rate (%) | IV Resistance | | | | | |
|---|---|---|---|---|---|---|---|---|---|---|---|---|---|
| | | | | | | | | SOC10% | | SOC50% | | 4.45V | |
| | | | | | | | | Initial | 30cyc | Initial | 30cyc | Initial | 30cyc |
| A1 | Sodium ethyl sulfate | 0.70 | Yes | 233 | 203 | 87 | 87 | 8 | 13 | 4 | 9 | 19 | 24 |
| A2 | Sodium methyl sulfate | 0.50 | No | 230 | 197 | 86 | 89 | 10 | 15 | 4 | 10 | 21 | 26 |
| B1 | Lithium dodecyl sulfate | 0.50 | Yes | 232 | 198 | 86 | 83 | 10 | 16 | 4 | 12 | 21 | 30 |
| B2 | Ammonium nickel(II) sulfate hexahydrate | 0.50 | No | 233 | 191 | 82 | 74 | 17 | 24 | 6 | 19 | 25 | 40 |
| B3 | Sodium hexadecyl sulfate | 0.50 | Yes | 232 | 194 | 84 | 83 | 14 | 18 | 7 | 16 | 28 | 37 |
| B4 | Potassium hydroquinone monosulfate | 0.50 | Yes | 231 | 193 | 84 | 78 | 15 | 20 | 6 | 17 | 26 | 37 |
| B5 | Sodium thiosulfate | 0.50 | No | 230 | 197 | 85 | 77 | 15 | 22 | 5 | 18 | 24 | 37 |
| B6 | Disodium 4,5-dihydroxybenzene-1,3-disulfonate monohydrate | 0.50 | No | 231 | 197 | 85 | 76 | 16 | 24 | 5 | 18 | 25 | 38 |
| B7 | Sodium linear alkylbenzenesulfonate | 0.50 | Yes | 230 | 194 | 84 | 78 | 16 | 21 | 7 | 18 | 27 | 38 |
| B8 | Sodium p-styrenesulfonate | 0.50 | Yes | 230 | 197 | 86 | 79 | 16 | 21 | 6 | 18 | 28 | 39 |
| B9 | Ammonium sulfate | 0.50 | No | 231 | 193 | 84 | 77 | 16 | 24 | 6 | 18 | 25 | 39 |
| B10 | Calcium sulfate | 0.50 | No | 228 | 193 | 85 | 76 | 15 | 23 | 6 | 18 | 24 | 39 |
| B11 | Sodium peroxydisulfate | 0.50 | No | 230 | 196 | 85 | 75 | 16 | 25 | 5 | 19 | 25 | 39 |
| B12 | Sodium tetradecyl sulfate | 0.50 | Yes | 230 | 193 | 84 | 79 | 14 | 19 | 7 | 17 | 28 | 39 |
| B13 | Potassium sulfate | 0.50 | No | 230 | 195 | 85 | 78 | 16 | 24 | 5 | 18 | 24 | 39 |
| B14 | Sodium sulfate | 0.50 | No | 230 | 196 | 85 | 77 | 16 | 23 | 5 | 18 | 25 | 39 |
| B15 | Lithium sulfate monohvdrate | 0.50 | No | 230 | 195 | 85 | 78 | 16 | 24 | 5 | 18 | 24 | 39 |
| B16 | Sodium sulfite | 0.50 | No | 229 | 194 | 85 | 78 | 16 | 24 | 5 | 18 | 25 | 40 |
| B17 | Sodium cyclohexylamidosulfate | 0.50 | No | 226 | 192 | 85 | 76 | 17 | 25 | 6 | 19 | 26 | 40 |
| B18 | Sodium aluminate | 0.50 | No | 239 | 192 | 80 | 76 | 14 | 23 | 7 | 19 | 27 | 40 |
| B19 | Sodium molybdate dihydrate | 0.50 | No | 230 | 197 | 86 | 76 | 16 | 25 | 6 | 19 | 25 | 40 |
| B20 | Barium titanate | 0.50 | No | 227 | 195 | 86 | 76 | 16 | 25 | 6 | 19 | 25 | 41 |
| B21 | Potassium isopropenyltrifluoroborate | 0.50 | Yes | 233 | 201 | 86 | 77 | 12 | 22 | 4 | 19 | 25 | 41 |
| B22 | Sodium hydrogen sulfate monohydrate | 0.50 | No | 227 | 194 | 85 | 77 | 16 | 25 | 6 | 19 | 26 | 41 |
| B23 | Sodium tungstate dihydrate | 0.50 | No | 230 | 197 | 86 | 76 | 16 | 25 | 6 | 20 | 25 | 41 |

**[Table 1-2]**

| | Additive | Addition amount (mol%) | Disintegration step | Charge capacity | Discharge capacity | Efficiency (%) | Retention rate (%) | IV Resistance | | | | | |
|---|---|---|---|---|---|---|---|---|---|---|---|---|---|
| | | | | | | | | SOC10% | | SOC50% | | 4.45V | |
| | | | | | | | | Initial | 30cyc | Initial | 30cyc | Initial | 30cyc |
| B24 | Potassium butyltrifluoroborate | 0.08 | Yes | 235 | 201 | 85 | 79 | 14 | 21 | 4 | 17 | 23 | 37 |
| B25 | Potassium butyltrifluoroborate | 0.80 | Yes | 233 | 202 | 87 | 84 | 14 | 22 | 5 | 19 | 27 | 42 |
| B26 | Potassium isopropenyltrifluoroborate | 0.07 | Yes | 236 | 201 | 85 | 78 | 14 | 21 | 4 | 17 | 24 | 38 |
| B27 | Sodium hexadecyl sulfate | 0.05 | Yes | 233 | 198 | 85 | 78 | 15 | 21 | 5 | 18 | 26 | 39 |
| B28 | N-methyltaurine | 0.07 | Yes | 235 | 200 | 85 | 77 | 14 | 21 | 4 | 18 | 25 | 39 |
| B29 | Sodium dextran sulfate (average molecular weight: about 5000) | 0.05 | Yes | 232 | 196 | 85 | 75 | 15 | 22 | 5 | 19 | 25 | 39 |
| B30 | Sodium ethyl sulfate | 0.07 | Yes | 233 | 199 | 85 | 79 | 14 | 21 | 5 | 18 | 26 | 39 |
| B31 | Sodium sulfite | 0.30 | Yes | 232 | 199 | 86 | 76 | 15 | 24 | 5 | 18 | 23 | 39 |
| B32 | 2-Aminoethanesulfonic acid (taurine) | 0.10 | Yes | 235 | 198 | 84 | 75 | 16 | 23 | 6 | 20 | 27 | 41 |
| B33 | 2-Aminoethanesulfonic acid (taurine) | 0.80 | Yes | 249 | 199 | 80 | 68 | 15 | 21 | 5 | 19 | 26 | 40 |
| B34 | Sodium linear alkylbenzenesulfonate | 0.05 | Yes | 231 | 196 | 85 | 75 | 16 | 22 | 6 | 19 | 26 | 40 |
| B35 | Lithium dodecyl sulfate | 0.05 | Yes | 233 | 198 | 85 | 78 | 15 | 22 | 5 | 19 | 26 | 40 |
| B36 | 2-Aminoethyl hydrogensulfate | 0.08 | Yes | 235 | 198 | 84 | 75 | 16 | 22 | 5 | 19 | 27 | 41 |
| B37 | 2-Aminoethyl hydrogensulfate | 0.80 | Yes | 236 | 197 | 83 | 47 | 17 | 24 | 7 | 25 | 28 | 46 |
| B38 | Sodium p-styrenesulfonate | 0.05 | Yes | 232 | 198 | 85 | 77 | 14 | 22 | 5 | 19 | 26 | 41 |
| B39 | Sodium tetradecyl sulfate | 0.05 | Yes | 233 | 197 | 85 | 77 | 16 | 22 | 6 | 19 | 26 | 41 |
| B40 | Potassium hydroquinone monosulfate | 0.05 | Yes | 233 | 197 | 85 | 75 | 16 | 22 | 5 | 19 | 27 | 41 |
| B41 | Sodium 1-hexadecanesulfonate | 0.05 | Yes | 233 | 198 | 85 | 75 | 15 | 23 | 5 | 19 | 26 | 41 |
| B42 | - | 0 | Yes | 232 | 197 | 85 | 78 | 15 | 22 | 5 | 19 | 27 | 41 |

From the results shown in Tables 1-1 and 1-2, it is understood that, in the test cells of Experimental Examples B1 to B42, the resistance of the positive electrode increases significantly as the number of cycles increases, whereas in the test cells of Experimental Examples A1 and A2, the increase in resistance is effectively suppressed. The test cells of Experimental Examples A1 and A2 also exhibit higher capacity retention after charge-discharge cycling and superior cycle characteristics compared with the test cells of Experimental Examples B1 to B42. Even when sodium ethyl sulfate is used, if its addition amount is less than 0.1 mol%, the effect of reduction in resistance is not obtained (see Experimental Example B30).

### <Experimental Example C1>

A positive electrode active material and the test cell were produced in the same manner as in Experimental Example A1, except that, in the step of adding sodium ethyl sulfate, sodium ethyl sulfate was mixed so that its content became 0.5 mol% relative to the total molar amount of metal elements excluding Li in the composite oxide, and heat treatment was performed at 500°C for 3 hours under an oxygen atmosphere, and the disintegration step of the composite oxide was omitted, and the above performance evaluation was conducted. The evaluation results are shown in Table 2 together with the composition and addition amount of the additive (the same applies to Experimental Examples D1 to D15). It was confirmed that particles of sodium ethyl sulfate were dispersed on particle surfaces of the composite oxide. It was confirmed the XPS spectrum of the positive electrode active material had peaks derived from S and Na on particle surfaces of the composite oxide and in a region at a depth shallower than 100 nm from the surfaces.

### <Experimental Example D1>

A positive electrode active material and a test cell were produced in the same manner as in Experimental Example C1, except that the step of adding sodium ethyl sulfate was omitted, and the performance evaluation was conducted.

### <Experimental Examples D2 to D15>

A positive electrode active material and a test cell were produced in the same manner as in Experimental Example C1, except that the compounds shown in Table 2 were used in place of sodium ethyl sulfate, and the performance evaluation was conducted. The addition amount of each compound was set to 0.5 mol% relative to the total molar amount of metal elements excluding Li in the composite oxide.

**[Table 2]**

| | Additive | Charge capacity | Discharge capacity | Efficiency (%) | Retention rate (%) | IV Resistance | | | | | |
|---|---|---|---|---|---|---|---|---|---|---|---|
| | | | | | | SOC10% | | SOC50% | | 4.45V | |
| | | | | | | Initial | 30cyc | Initial | 30cyc | Initial | 30cyc |
| C1 | Sodium ethyl sulfate | 234 | 199 | 85 | 83 | 13 | 18 | 8 | 16 | 20 | 27 |
| D1 | - | 236 | 199 | 84 | 68 | 19 | 26 | 13 | 27 | 30 | 44 |
| D2 | N-methyltaurine | 234 | 198 | 85 | 78 | 14 | 21 | 9 | 20 | 21 | 32 |
| D3 | Sodium hexadecyl sulfate | 227 | 186 | 82 | 85 | 16 | 21 | 13 | 21 | 29 | 37 |
| D4 | Sodium p-styrenesulfonate | 230 | 192 | 83 | 72 | 16 | 22 | 14 | 23 | 27 | 36 |
| D5 | Sodium tetradecyl sulfate | 231 | 193 | 84 | 85 | 15 | 20 | 10 | 19 | 25 | 33 |
| D6 | Sodium 1-hexadecanesulfonate | 232 | 195 | 84 | 81 | 14 | 20 | 9 | 19 | 22 | 31 |
| D7 | 2-Aminoethanesulfonic acid (taurine) | 234 | 199 | 85 | 74 | 14 | 23 | 10 | 23 | 21 | 36 |
| D8 | 2-Aminoethyl hydrogensulfate | 235 | 198 | 85 | 71 | 16 | 25 | 11 | 25 | 27 | 41 |
| D9 | Potassium hydroquinone monosulfate | 230 | 193 | 84 | 75 | 16 | 23 | 10 | 22 | 24 | 37 |
| D10 | Potassium isopropenyltrifluoroborate | 239 | 197 | 82 | 71 | 13 | 22 | 8 | 22 | 23 | 37 |
| D11 | Potassium butyltrifluoroborate | 239 | 196 | 82 | 72 | 15 | 23 | 10 | 23 | 25 | 39 |
| D12 | Sodium dextran sulfate (average molecular weight: about 5000) | 236 | 201 | 85 | 70 | 16 | 24 | 11 | 24 | 26 | 39 |
| D13 | Sodium linear alkylbenzenesulfonate | 232 | 193 | 83 | 70 | 15 | 23 | 12 | 24 | 25 | 37 |
| D14 | PVA (polyvinyl alcohol) | 236 | 199 | 84 | 67 | 17 | 26 | 13 | 27 | 29 | 44 |
| D15 | Sodium dodecyl sulfate | 232 | 196 | 84 | 86 | 14 | 20 | 9 | 18 | 23 | 31 |

From the results shown in Table 2, it is understood that the test cells of Experimental Example C1 have the positive electrode resistance kept low as compared with the test cells of Experimental Examples D1 to D15. It is also understood from these results that, regardless of whether the heat-treatment temperature in the step of adding the sulfur compound is 300°C or 500°C, an effect of reduction in resistance is obtained. In particular, in the region where the SOC is high, the difference is pronounced.

### <Experimental Examples E1 to E3>

A positive electrode active material and the test cell were produced in the same manner as in Experimental Example A1, except that, in the step of adding sodium ethyl sulfate, sodium ethyl sulfate was mixed so that its content became 0.3 mol%, 0.5 mol%, and 1.0 mol%, respectively, relative to the total molar amount of metal elements excluding Li in the composite oxide, and heat treatment was performed at 300°C for 3 hours in air, and the disintegration step of the composite oxide was omitted, and the above performance evaluation was conducted. The evaluation results are shown in Table 3. In each of the positive electrode active materials, it was confirmed that particles of sodium ethyl sulfate were dispersed on particle surfaces of the composite oxide. It was confirmed the XPS spectrum of the positive electrode active material had peaks derived from S and Na on particle surfaces of the composite oxide and in a region at a depth shallower than 100 nm from the surfaces.

### <Experimental Examples E4 to E6>

A positive electrode active material and a test cell were produced in the same manner as in Experimental Example A1, except that boric acid was added together with sodium ethyl sulfate, and the performance evaluation was conducted. The amounts of boric acid and sodium ethyl sulfate added are shown in Table 3 together with the evaluation results.

In each of the positive electrode active materials of Experimental Examples E4 to E6, it was confirmed that particles of boric acid and sodium ethyl sulfate were dispersed on particle surfaces of the composite oxide. It was also confirmed the XPS spectrum of the positive electrode active material had peaks derived from S, B, and Na on particle surfaces of the composite oxide and in a region at a depth shallower than 100 nm from the surfaces. It was further confirmed that a peak derived from Ni having a binding energy in a range of greater than or equal to 858 eV and less than or equal to 862 eV and a peak derived from Mn having a binding energy in a range of greater than or equal to 645 eV and less than or equal to 649 eV were each present on particle surfaces of the composite oxide and in a region at a depth of less than 50 nm from the surfaces.

### <Experimental Example EE1>

A positive electrode active material and a test cell were produced in the same manner as in Experimental Example E1, except that the step of adding sodium ethyl sulfate was omitted, and the performance evaluation was conducted.

**[Table 3]**

| | Additive | Addition amount (mol%) | Charge capacity | Discharge capacity | Efficiency (%) | Retention rate (%) | IV Resistance | | | | | |
|---|---|---|---|---|---|---|---|---|---|---|---|---|
| | | | | | | | SOC10% | | SOC50% | | SOC100% | |
| | | | | | | | Initial | 30cyc | Initial | 30cyc | Initial | 30cyc |
| E1 | Sodium ethyl sulfate | 0.3 | 230 | 196 | 86 | 88 | 10 | 16 | 4 | 10 | 20 | 27 |
| E2 | Sodium ethyl sulfate | 0.5 | 228 | 194 | 85 | 91 | 10 | 14 | 5 | 9 | 22 | 26 |
| E3 | Sodium ethyl sulfate | 1.0 | 225 | 190 | 84 | 94 | 11 | 14 | 6 | 10 | 26 | 27 |
| E4 | H₃BO₃/sodium ethyl sulfate | 1.5/0.5 | 238 | 207 | 87 | 84 | 6 | 6 | 4 | 5 | 14 | 15 |
| E5 | H₃BO₃/sodium ethyl sulfate | 1.0/0.5 | 239 | 209 | 87 | 83 | 4 | 5 | 3 | 4 | 11 | 13 |
| E6 | H₃BO₃/sodium ethyl sulfate | 1.0/0.3 | 240 | 211 | 88 | 86 | 5 | 6 | 3 | 5 | 11 | 15 |
| EE1 | - | 0 | 232 | 198 | 85 | 76 | 15 | 24 | 5 | 19 | 24 | 40 |

From the results shown in Table 3, it is understood that, even when the heat treatment of the mixture is performed in air in the step of adding sodium ethyl sulfate, an excellent effect of suppressing the increase in resistance is obtained. In particular, when the positive electrode active materials of Experimental Examples E4 to E6 were used, the effect of suppressing the increase in resistance was pronounced. The oxygen concentration in the heat treatment step is preferably greater than or equal to 5%, more preferably greater than or equal to 10%, and particularly preferably greater than or equal to 18%.

### <Experimental Examples F1 to F7>

A positive electrode active material and the test cell were produced in the same manner as in Experimental Example A1, except that the addition amount of sodium ethyl sulfate was set to the addition amounts shown in Table 4 and the disintegration step using a jet mill was omitted after drying the water-washed composite oxide, and the above performance evaluation was conducted. The D50 of the lithium transition metal composite oxide was 4.9 µm.

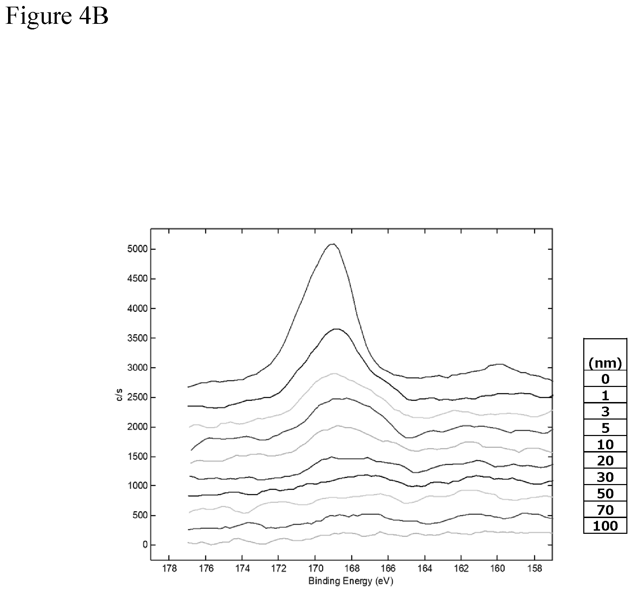

FIG. 4B is an XPS spectrum of a positive electrode active material in Experimental Example F4, and illustrates a binding energy range in which a peak derived from S appears. As shown in FIG. 4B, on the particle surfaces of the lithium transition metal composite oxide and in a region at a depth of 20 nm (particularly pronounced at 10 nm) from the surfaces, a peak derived from S was confirmed in the range of binding energies greater than or equal to 168 eV and less than or equal to 172 eV.

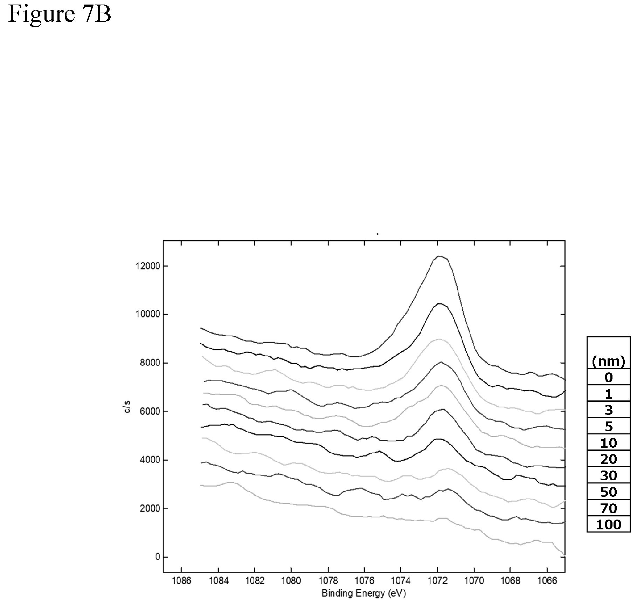

FIG. 7B is an XPS spectrum of a positive electrode active material in Experimental Example F4, and illustrates a binding energy range in which a peak derived from Na appears. As shown in FIG. 7B, on the particle surfaces of the lithium transition metal composite oxide and in a region at a depth of 100 nm from the surfaces, a peak derived from Na was confirmed in the range of binding energies greater than or equal to 1070 eV and less than or equal to 1073 eV.

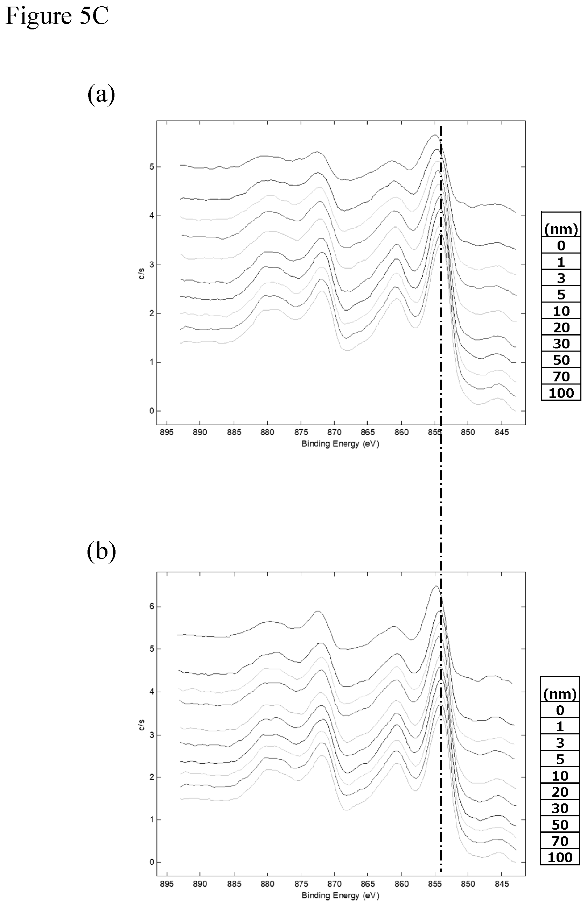

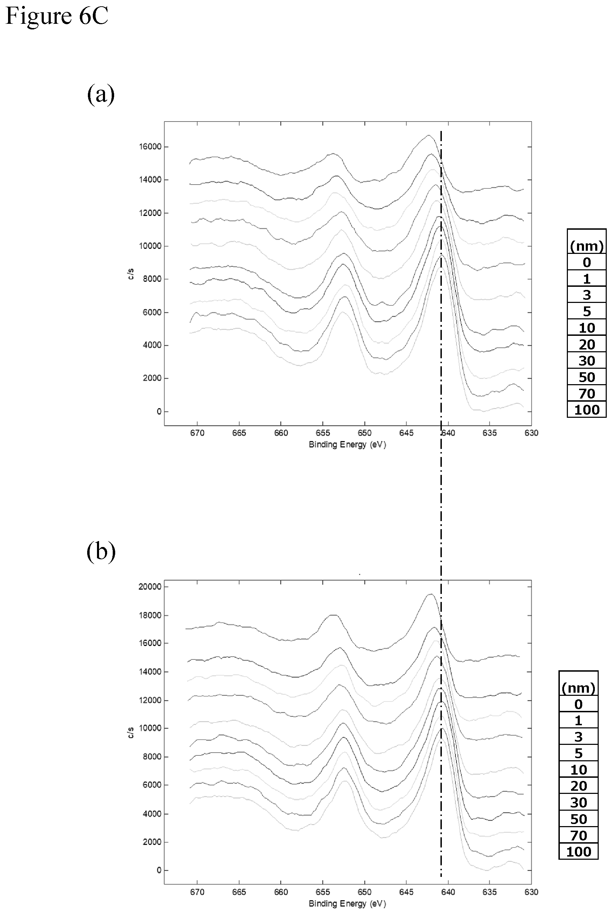

FIG. 5C is an XPS spectrum of the positive electrode active material of Experimental Example F4, showing (a) the range of binding energies in which a peak derived from Ni appears. In FIG. 5C, for comparison, an XPS spectrum of the positive electrode active material of Experimental Example G8, which contains no S, is shown in (b). FIG. 6C is an XPS spectrum of a positive electrode active material produced in Experimental Example F4, showing (a) the range of binding energies in which a peak derived from Mn appears. In FIG. 6C, for comparison, an XPS spectrum of the positive electrode active material of Experimental Example G8 is shown in (b).

As shown in FIGS. 5C and 6C, in the XPS spectrum of the positive electrode active material of Experimental Example F4, when compared with the spectrum of the positive electrode active material of Experimental Example G8, which contains no S, a shift of the peaks derived from Ni and Mn toward the higher energy side (0.4 eV for Ni and 0.2 eV for Mn) is confirmed in the vicinity of the particle surfaces of the composite oxide. Since the depth at which this peak shift is confirmed substantially coincides with the depth (10 nm) at which the peak derived from S clearly appears as shown in FIG. 4B, S dissolved in the solid solution in at least a depth range of 10 nm on and in the vicinity of the particle surfaces of the composite oxide to form a surface layer in which the bonding states of Ni and Mn have changed.

In addition, in the XPS spectrum of the positive electrode active material produced in Experimental Example F2, a clear peak derived from S having a binding energy in a range of greater than or equal to 168 eV and less than or equal to 172 eV was confirmed on particle surfaces of the lithium transition metal composite oxide and in a region at a depth of 70 nm from the surfaces. As in Experimental Example F4, at a depth of 70 nm from the surfaces where S is present, S dissolved in the solid solution in the composite oxide to form a surface layer in which the binding states of Ni and Mn have changed. In addition, an XPS peak attributable to Na was also confirmed at 100 nm.

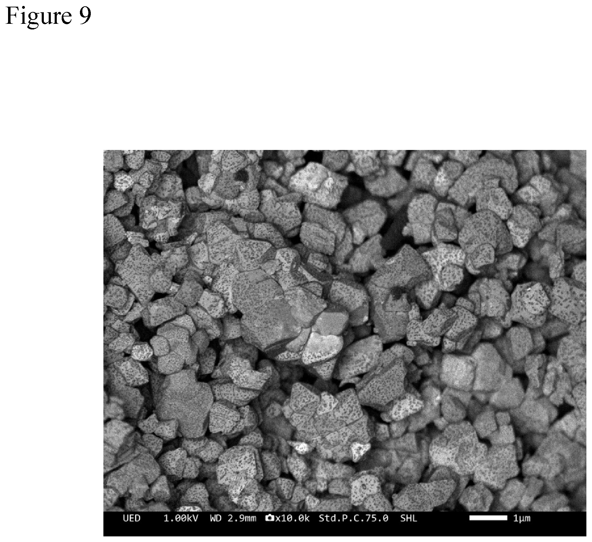

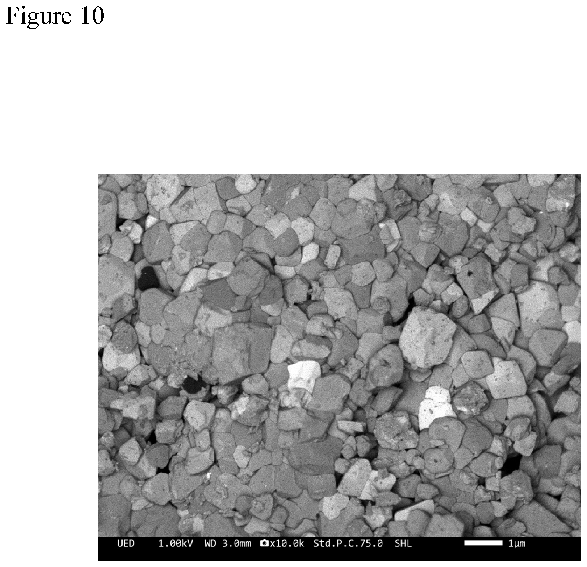

FIG. 9 is a backscattered electron image of a positive electrode active material produced in Experimental Example F2. As shown in FIG. 9, the small particles present on the particle surfaces of the lithium transition metal composite oxide are sodium ethyl sulfate. The particles of sodium ethyl sulfate are not localized only on part of the particle surfaces of the composite oxide but are uniformly dispersed over a wide area of the particle surfaces. The average particle diameter of sodium ethyl sulfate was about 0.02 µm. FIG. 10 is a backscattered electron image of the positive electrode active material produced in Experimental Example G8, and no granular deposits are observed on the particle surfaces.

### <Experimental Examples F8 to F21>

A positive electrode active material and a test cell were produced in the same manner as in Experimental Example F1, except that boric acid was added together with sodium ethyl sulfate, and the performance evaluation was conducted. The amounts of boric acid and sodium ethyl sulfate added are shown in Table 4 together with the evaluation results. In Experimental Examples 11 to 13, boron was added to the composite oxide that had not been disintegrated, and after heat treatment was performed at 300°C for 3 hours in an oxygen atmosphere, sodium ethyl sulfate was added, and heat treatment was performed at 300°C for 3 hours in an oxygen atmosphere, thereby producing the positive electrode active material. It was also confirmed that the XPS spectrum of the positive electrode active material had peaks derived from B, S and Na on particle surfaces of the composite oxide and in a region at a depth of 100 nm from the surfaces. It was further confirmed that a peak derived from Ni having a binding energy in a range of greater than or equal to 858 eV and less than or equal to 862 eV and a peak derived from Mn having a binding energy in a range of greater than or equal to 645 eV and less than or equal to 649 eV were each present on particle surfaces of the composite oxide and in a region at a depth of less than 50 nm from the surfaces.

As shown in FIGS. 3A, 4A, 5A, 6A, and 7A, the XPS spectra of the positive electrode active material of Experimental Example F9 respectively show the ranges of binding energies in which peaks derived from B, S, Ni, Mn, and Na appear. In the XPS spectra, on the particle surfaces of the composite oxide and in a region at a depth shallower than 100 nm from the surfaces, peaks derived from B, S, and Na were newly confirmed respectively at greater than or equal to 194.5 eV and less than or equal to 197 eV, greater than or equal to 172 eV and less than or equal to 174 eV, and greater than or equal to 1074 eV and less than or equal to 1077 eV. In addition, on the particle surfaces of the composite oxide and in a region at a depth of 50 nm from the surfaces, a peak derived from Ni was newly confirmed in the range of binding energies greater than or equal to 858 eV and less than or equal to 862 eV, and a peak derived from Mn was newly confirmed in the range of binding energies greater than or equal to 645 eV and less than or equal to 649 eV, and approximately two peaks were observed. By containing both B and S, peaks on the lower energy side weaken and newly appearing peaks on the higher energy side become stronger as the position approaches particle surfaces. Accordingly, new bonds composed of B and S are formed on the particle surfaces, and the presence of these bonds suppresses structural degradation and improves resistance and capacity retention. B and S shift to the higher energy side by bonding with each other with oxygen interposed.

In the XPS spectra of the positive electrode active materials of Experimental Examples G3, F4, and G8 (each being a positive electrode active material containing neither B, S, nor both) (see FIGS. 5B to 5D and 6B to 6D), a peak derived from Ni is confirmed to have a binding energy in a range of greater than or equal to 853 eV and less than or equal to 855.5 eV, a peak derived from Mn is confirmed to have a binding energy in a range of greater than or equal to 640 eV and less than or equal to 643 eV, a peak derived from S is confirmed to have a binding energy in a range of greater than or equal to 167 eV and less than or equal to 170 eV, a peak derived from B is confirmed to have a binding energy in a range of greater than or equal to 190 eV and less than or equal to 193 eV, and a peak derived from Na is confirmed to have a binding energy in a range of greater than or equal to 1071 eV and less than or equal to 1072 eV.

When the spectra of the positive electrode active material of Experimental Example F4 are compared with those of Experimental Example G8, which contains no S, a shift of the peaks derived from Ni and Mn toward the higher energy side (0.4 eV for Ni and 0.2 eV for Mn) is confirmed in the vicinity of the particle surfaces of the composite oxide. Since the depth at which this peak shift is confirmed substantially coincides with the depth (10 nm) at which the peak derived from S clearly appears, S is dissolved in the solid solution in at least a depth range of 10 nm on and in the vicinity of the particle surfaces of the composite oxide to form a surface layer in which the bonding states of Ni and Mn have changed.

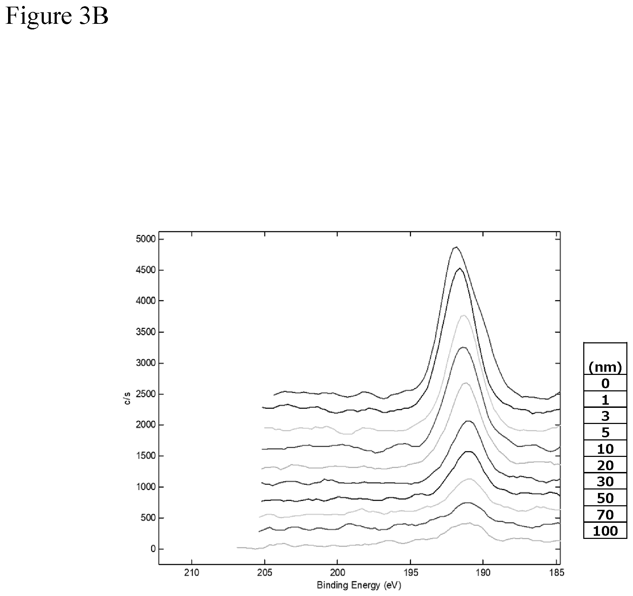

On the other hand, in the XPS spectra of the positive electrode active material of Experimental Example F9, in addition to the above peaks (a peak derived from Ni having a binding energy in a range of greater than or equal to 853 eV and less than or equal to 855.5 eV, and a peak derived from Mn having a binding energy in a range of greater than or equal to 640 eV and less than or equal to 643 eV), a peak derived from Ni newly appears having a binding energy in a range of greater than or equal to 858 eV and less than or equal to 862 eV, and a peak derived from Mn newly appears having a binding energy in a range of greater than or equal to 645 eV and less than or equal to 649 eV, indicating that at least two or more binding states of Ni and Mn exist, respectively. The newly appearing peaks are observed in a region shallower than 50 nm from particle surfaces of the composite oxide (clearly at 30 nm). Since the depth at which this peak shift is confirmed substantially coincides with the depth (50 nm) at which a new peak of boron appears as shown in FIGS. 3A, B, S, and Na are bonded via oxygen in at least a depth range of 50 nm from particle surfaces and their vicinity of the composite oxide. Therefore, in a region shallower than 50 nm from particle surfaces of the composite oxide, a new layer composed of at least three of S, B, Ni, Mn, and Na is formed, or these elements are dissolved in the solid solution. The thickness of this layer is as thin as at least 5 nm, preferably 10 nm or more, and more preferably 30 nm or more. The composite oxide having particle surfaces in which both B and S are present exhibits a high suppressing effect on electrolyte decomposition during high-voltage charging, suppresses resistance increase, and maintains a high capacity retention rate.

FIG. 10 is a backscattered electron image of a positive electrode active material in Experimental Example F9. From the backscattered electron image of the positive electrode active material, it was confirmed that particles of boric acid and sodium ethyl sulfate were dispersed on particle surfaces of the composite oxide. The average particle size of the sodium ethyl sulfate was about 0.05 µm.

In each of the positive electrode active materials of Experimental Examples F8 and F10 to F21, it was confirmed that particles of boric acid and sodium ethyl sulfate were dispersed on particle surfaces of the composite oxide. It was also confirmed that the XPS spectrum of the positive electrode active material had peaks derived from S, B, and Na on particle surfaces of the composite oxide and in a region at a depth shallower than 100 nm from the surfaces. It was further confirmed that a peak derived from Ni having a binding energy in a range of greater than or equal to 858 eV and less than or equal to 862 eV and a peak derived from Mn having a binding energy in a range of greater than or equal to 645 eV and less than or equal to 649 eV were each present on particle surfaces of the composite oxide and in a region at a depth of less than 50 nm from the surfaces.

### <Experimental Example G1>

A positive electrode active material and a test cell were produced in the same manner as in Experimental Example F5, except that sodium ethyl sulfate was added before firing of the lithium transition metal composite oxide and that the washing step was omitted, and the above performance evaluation was conducted. Since the surface state of the composite oxide particles differs from the surface state of the composite oxide particles according to the present disclosure, it is difficult to obtain a positive electrode active material having excellent capacity retention rate after charge-discharge cycle. In addition, when washing is not performed, the resistance value becomes smaller, and therefore IV resistance evaluation was not conducted.

### <Experimental Examples G2 and G3>

A positive electrode active material and a test cell were produced in the same manner as in Experimental Examples F1 and F3, except that boric acid was used in place of sodium ethyl sulfate, and the performance evaluation was conducted. FIGS. 3B, 5B, and 6B show, as described above, XPS spectra of the positive electrode active material of Experimental Example G3, indicating ranges of binding energies in which a peak derived from B appears, a peak derived from Ni appears, and in which a peak derived from Mn appears, respectively.

### <Experimental Examples G4 to G7>

A positive electrode active material and a test cell were produced in the same manner as in Experimental Example F1, except that the compounds shown in Table 4 were used in place of sodium ethyl sulfate, and the addition amounts thereof were adjusted to those shown in Table 4, and the performance evaluation was conducted. The evaluation results are shown in Table 4.

### <Experimental Example G8>

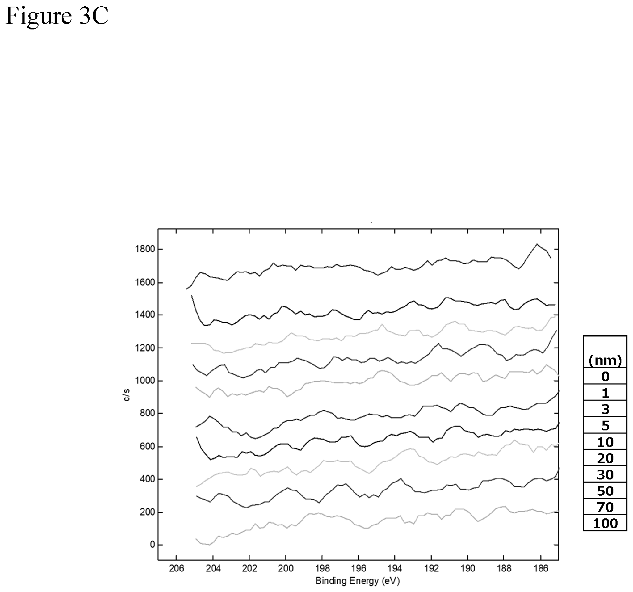

A positive electrode active material and a test cell were produced in the same manner as in Experimental Example F1, except that the step of adding sodium ethyl sulfate was omitted, and the performance evaluation was conducted. FIG. 3C, 4C, 5D, and 6D show, as described above, XPS spectra of the positive electrode active material of Experimental Example G3, indicating ranges of binding energies in which a peak derived from B appears, a peak derived from Ni appears, and a peak derived from Mn appears, respectively.

**[Table 4]**

| | Additive | Addition amount (mol%) | Charge capacity | Discharge capacity | Efficiency (%) | Retention rate (%) | IV Resistance | | | | | |
|---|---|---|---|---|---|---|---|---|---|---|---|---|
| | | | | | | | SOC10% | | SOC50% | | SOC100% | |
| | | | | | | | Initial | 30cyc | Initial | 30cyc | Initial | 30cyc |
| F1 | Sodium ethyl sulfate | 2.0 | 227 | 190 | 84 | 95 | 13 | 13 | 9 | 12 | 31 | 30 |
| F2 | Sodium ethyl sulfate | 1.5 | 226 | 190 | 84 | 93 | 13 | 14 | 8 | 10 | 29 | 29 |
| F3 | Sodium ethyl sulfate | 1.0 | 227 | 192 | 85 | 92 | 12 | 13 | 6 | 8 | 25 | 25 |
| F4 | Sodium ethyl sulfate | 0.7 | 229 | 194 | 85 | 91 | 11 | 12 | 5 | 8 | 23 | 24 |
| F5 | Sodium ethyl sulfate | 0.5 | 230 | 196 | 85 | 90 | 10 | 12 | 4 | 7 | 21 | 22 |
| F6 | Sodium ethyl sulfate | 0.2 | 230 | 195 | 85 | 83 | 12 | 16 | 5 | 9 | 22 | 27 |
| F7 | Sodium ethyl sulfate | 0.1 | 249 | 200 | 80 | 83 | 9 | 17 | 4 | 13 | 22 | 30 |
| F8 | H₃BO₃/sodium ethyl sulfate | 2.0/0.7 | 237 | 207 | 87 | 83 | 9 | 8 | 6 | 7 | 18 | 19 |
| F9 | H₃BO₃/sodium ethyl sulfate | 1.0/0.7 | 240 | 209 | 87 | 86 | 6 | 7 | 4 | 6 | 13 | 14 |
| F10 | H₃BO₃/sodium ethyl sulfate | 0.5/0.7 | 238 | 208 | 87 | 83 | 8 | 11 | 4 | 8 | 17 | 21 |
| F11 | Sodium ethyl sulfate added after addition of H₃BO₃ | 2.0/0.7 | 239 | 209 | 87 | 83 | 9 | 11 | 5 | 9 | 19 | 24 |
| F12 | Sodium ethyl sulfate added after addition of H₃BO₃ | 1.0/0.7 | 238 | 208 | 87 | 82 | 11 | 15 | 5 | 12 | 20 | 27 |
| F13 | Sodium ethyl sulfate added after addition of H₃BO₃ | 0.5/0.7 | 237 | 204 | 86 | 82 | 11 | 16 | 6 | 13 | 22 | 29 |
| F14 | H₃BO₃/sodium methyl sulfate | 2.0/2.0 | 230 | 198 | 86 | 83 | 9 | 7 | 7 | 6 | 18 | 16 |
| F15 | H₃BO₃/sodium methyl sulfate | 1.5/1.5 | 232 | 201 | 87 | 82 | 7 | | 5 | 6 | 16 | 15 |
| F16 | H₃BO₃/sodium methyl sulfate | 2.0/1.5 | 231 | 200 | 86 | 83 | 9 | 7 | 7 | 6 | 17 | 16 |
| F17 | H₃BO₃/sodium methyl sulfate | 0.5/0.2 | 241 | 212 | 88 | 87 | 5 | 6 8 | 2 | 6 | 11 | 16 |
| F18 | H₃BO₃/sodium methyl sulfate | 2.0/1.0 | 237 | 207 | 87 | 84 | 7 | 7 | 5 | 6 | 15 | 16 |
| F19 | H₃BO₃/sodium methyl sulfate | 1.0/0.5 | 240 | 211 | 88 | 86 | 6 | 8 | 3 | 6 | 13 | 17 |
| F20 | H₃BO₃/sodium methyl sulfate | 0.5/0.3 | 239 | 209 | 87 | 84 | 6 | 12 | 3 | 9 | 13 | 21 |
| F21 | H₃BO₃/sodium methyl sulfate | 0.5/0.1 | 236 | 206 | 87 | 81 | 9 | 19 | 4 | 16 | 17 | 32 |
| G1 | Sodium ethyl sulfate (added during firing, unwashed) | 0.5 | 232 | 198 | 86 | 77 | 15 | 23 | 5 | 18 | 24 | 39 |
| G2 | H₃BO₃ | 2.0 | 241 | 211 | 88 | 80 | 9 | 16 | 4 | 15 | 17 | 37 |
| G3 | H₃BO₃ | 1.0 | 241 | 210 | 87 | 77 | 9 | 24 | 4 | 22 | 16 | 41 |
| G4 | Sodium dodecyl sulfate | 0.5 | 232 | 199 | 86 | 87 | 9 | 14 | 4 | 10 | 20 | 27 |
| G5 | Sodium dodecyl sulfate | 0.1 | 231 | 198 | 86 | 80 | 13 | 19 | 5 | 15 | 24 | 35 |
| G6 | H₃BO₃/sodium dodecyl sulfate | 1.5/0.7 | 222 | 187 | 84 | 91 | 15 | 16 | 9 | 14 | 29 | 33 |
| G7 | H₃BO₃/sodium dodecyl sulfate | 1.0/0.5 | 224 | 190 | 85 | 91 | 11 | 12 | 6 | 11 | 24 | 29 |
| G8 | - | 0 | 231 | 198 | 86 | 76 | 16 | 25 | 5 | 19 | 25 | 40 |

From the results shown in Table 4, it is understood that the test cells of Experimental Examples F1 to F21, especially the test cells of Experimental Examples F8 to F21, have the positive electrode resistance kept low as compared with the test cells of Experimental Example G1 to G8. In particular, the difference is pronounced in a high SOC region. Even when sodium ethyl sulfate is used, no effect of reduction in resistance is obtained when it is added during firing of the lithium transition metal composite oxide. In addition, no effect of reduction in resistance is obtained when boron is added alone. Furthermore, when sodium dodecyl sulfate is used together with boron, the capacity is lower and the effect of reduction in resistance is smaller compared with the case where nothing is added (Experimental Example G8). Sodium dodecyl sulfate has 12 carbon atoms, and carbon covers particle surfaces of the composite oxide, thereby inhibiting bonding between boron and sulfur and preventing a synergistic effect from being exhibited. Therefore, the sulfate ester to be used is preferably one having less than or equal to 5 carbon atoms.

### <Experimental Examples H1 to H8>

LiOH and a Ni_{0.91}Co_{0.04}Al_{0.05}(OH)₂ powder obtained by a coprecipitation method were mixed so that a molar ratio of Li to a total amount of Ni, Co, and Al became 1.03:1 to obtain a mixture. This mixture was subjected to two-stage firing under an oxygen stream having an oxygen concentration of greater than or equal to 90% (at a flow rate of greater than or equal to 0.15 L/min and less than or equal to 0.2 L/min per 1 L of furnace volume). Specifically, the mixture was heated from room temperature to 670°C over 5 hours, and then from 670°C to 720°C over 50 minutes. Thereafter, the temperature was maintained at 720°C for 3 hours to obtain a lithium transition metal composite oxide. The obtained composite oxide particles have a secondary particle shape formed by aggregation of a large number of primary particles.

The obtained lithium transition metal composite oxide was washed with water to remove excess lithium, and the washed composite oxide was dried. A positive electrode active material was obtained by adding and mixing the compound shown in Table 5 with the dried lithium transition metal composite oxide, and then performing heat treatment at 300°C for 3 hours in an oxygen atmosphere, whereby the compound shown in Table 5 adhered to particle surfaces of the lithium transition metal composite oxide. The D50 of the positive electrode active material was 11 µm. A positive electrode active material and a test cell were produced in the same manner as in Experimental Example A1, except that the positive electrode active material was used, and the performance evaluation was conducted. The performance of the test cell was evaluated as charging up to 4.4 V (vs. Li metal) in a temperature environment (25°Cor 45°C) as shown in Table 5. The state of the cell voltage of 4.4 V was regarded as SOC 100%, and the IV resistance was evaluated.

**[Table 5]**

| | Additive | Addition amount (mol%) | Temperature (°C) | Charge capacity | Discharge capacity | Efficiency (%) | Retention rate (%) | IV Resistance | | | | | |
|---|---|---|---|---|---|---|---|---|---|---|---|---|---|
| | | | | | | | | SOC10% | | SOC50% | | SOC100% | |
| | | | | | | | | Initial | 30cyc | Initial | 30cyc | Initial | 30cyc |
| H1 | Sodium ethyl sulfate | 0.25 | 45 | 239 | 202 | 85 | 104 | 7 | 7 | 1 | 2 | 10 | 12 |
| H2 | Sodium ethyl sulfate | 0.5 | 45 | 238 | 199 | 84 | 106 | 7 | 7 | 1 | 2 | 11 | 13 |
| H3 | Sodium ethyl sulfate | 0.5 | 25 | 233 | 181 | 78 | 104 | 7 | 11 | 2 | 3 | 16 | 17 |
| H4 | Sodium ethyl sulfate | 0.75 | 45 | 244 | 197 | 80 | 104 | 8 | 8 | 1 | 2 | 13 | 15 |
| H5 | H₃BO₃/sodium ethyl sulfate | 0.5/0.5 | 45 | 243 | 217 | 90 | 98 | 6 | 6 | 1 | 1 | 7 | 11 |
| H6 | H₃BO₃/sodium ethyl sulfate | 0.5/1.0 | 45 | 242 | 219 | 91 | 95 | 6 | 7 | 1 | 1 | 8 | 12 |
| H7 | - | - | 45 | 244 | 288 | 93 | 90 | 4 | 6 | 1 | 2 | 5 | 8 |
| H8 | - | - | 25 | 241 | 210 | 87 | 87 | 12 | 13 | 2 | 3 | 11 | 14 |

From the results shown in Table 5, it is understood that even when sodium ethyl sulfate is added to a lithium transition metal composite oxide having a secondary-particle morphology and containing no Mn, no effect of reduction in resistance is obtained, and the discharge capacity decreases and the resistance increases.

### <Experimental Examples J1 to J25>

A positive electrode active material and a test cell were prepared in the same manner as in Experimental Example A1, except that, after drying the washed composite oxide, the disintegration step using a jet mill was omitted, and boric acid was added together with sodium ethyl sulfate and mixed, followed by heat treatment at 300°C for 3 hours in an oxygen atmosphere (flow rate: 3 L/min), and the performance evaluation was conducted. The amounts of boric acid and sodium ethyl sulfate added are shown in Table 6 together with the evaluation results.

In each of the positive electrode active materials of Experimental Examples J1 to J25, it was confirmed that particles of boric acid and sodium ethyl sulfate were dispersed on particle surfaces of the composite oxide. It was also confirmed by X-ray photoelectron spectroscopy (XPS) that peaks derived from B, S, and Na were each present on particle surfaces of the composite oxide and in a region at a depth shallower than 100 nm from the surfaces. It was further confirmed that a peak derived from Ni having a binding energy in a range of greater than or equal to 858 eV and less than or equal to 862 eV and a peak derived from Mn having a binding energy in a range of greater than or equal to 645 eV and less than or equal to 649 eV were each present on particle surfaces of the composite oxide and in a region at a depth of less than 50 nm from the surfaces.

### <Experimental Examples K1 to K3>

A positive electrode active material and a test cell were prepared in the same manner as in Experimental Example A1, except that boric acid was added in place of sodium ethyl sulfate, the disintegration step using a jet mill was omitted, and the heat treatment was performed at 300°C for 3 hours in an oxygen atmosphere (flow rate: 3 L / min), and the performance evaluation was conducted. The amount of boric acid added is shown in Table 6 together with the evaluation results.

### <Experimental Example K4>

A positive electrode active material and a test cell were prepared in the same manner as in Experimental Example A1, except that the step of adding sodium ethyl sulfate was omitted, the disintegration step using a jet mill was omitted, and the heat treatment was performed at 300°C for 3 hours in an oxygen atmosphere (flow rate: 3 L/min), and the performance evaluation was conducted.

**[Table 6]**

| | Additive | Addition amount (mass%) | Charge capacity | Discharge capacity | Efficiency (%) | Retention rate (%) | IV Resistance | | | | | |
|---|---|---|---|---|---|---|---|---|---|---|---|---|
| | | | | | | | SOC10% | | SOC50% | | SOC100% | |
| | | | | | | | Initial | 30cyc | Initial | 30cyc | Initial | 30cyc |
| K1 | H₃BO₃ | 0.50 | 241 | 208 | 86 | 71 | 10 | 26 | 4 | 24 | 16 | 41 |
| J1 | H₃BO₃/sodium ethyl sulfate | 0.50/0.10 | 239 | 210 | 88 | 83 | 6 | 12 | 3 | 8 | 12 | 19 |
| J2 | H₃BO₃/sodium ethyl sulfate | 0.50/0.30 | 238 | 209 | 88 | 86 | 5 | 8 | 3 | 5 | 12 | 16 |
| J3 | H₃BO₃/sodium ethyl sulfate | 0.50/0.50 | 237 | 208 | 88 | 86 | 6 | 8 | 3 | 6 | 13 | 16 |
| J4 | H₃BO₃/sodium ethyl sulfate | 0.50/0.70 | 237 | 208 | 88 | 87 | 6 | 7 | 3 | 5 | 13 | 15 |
| J5 | H₃BO₃/sodium ethyl sulfate | 0.50/1.00 | 236 | 207 | 88 | 87 | 7 | 9 | 4 | 6 | 13 | 16 |
| J6 | H₃BO₃/sodium ethyl sulfate | 0.75/0.10 | 239 | 210 | 88 | 86 | 6 | 7 | 3 | 5 | 12 | 15 |
| J7 | H₃BO₃/sodium ethyl sulfate | 0.75/0.30 | 233 | 205 | 88 | 88 | 5 | 6 | 3 | 4 | 11 | 14 |
| J8 | H₃BO₃/sodium ethyl sulfate | 0.75/0.50 | 236 | 207 | 88 | 88 | 6 | 7 | 3 | 5 | 12 | 15 |
| J9 | H₃BO₃/sodium ethyl sulfate | 0.75/0.70 | 237 | 208 | 88 | 88 | 5 | 7 | 3 | 5 | 12 | 14 |
| J10 | H₃BO₃/sodium ethyl sulfate | 0.75/1.00 | 237 | 207 | 88 | 89 | 6 | 6 | 3 | 5 | 12 | 14 |
| K2 | H₃BO₃ | 1.00 | 241 | 210 | 87 | 77 | 9 | 24 | 4 | 22 | 16 | 41 |
| J11 | H₃BO₃/sodium ethyl sulfate | 1.00/0.10 | 238 | 209 | 88 | 85 | 6 | 8 | 3 | 6 | 12 | 17 |
| J12 | H₃BO₃/sodium ethyl sulfate | 1.00/0.30 | 237 | 208 | 88 | 88 | 5 | 6 | 3 | 5 | 12 | 14 |
| J13 | H₃BO₃/sodium ethyl sulfate | 1.00/0.50 | 236 | 207 | 87 | 88 | 6 | 6 | 3 | 5 | 12 | 14 |
| J14 | H₃BO₃/sodium ethyl sulfate | 1.00/0.70 | 235 | 206 | 88 | 89 | 6 | 6 | 4 | 5 | 12 | 14 |
| J15 | H₃BO₃/sodium ethyl sulfate | 1.00/1.00 | 234 | 204 | 88 | 88 | 6 | 6 | 4 | 4 | 12 | 13 |
| J16 | H₃BO₃/sodium ethyl sulfate | 1.50/0.10 | 239 | 210 | 88 | 86 | 6 | 6 | 4 | 5 | 13 | 15 |
| J17 | H₃BO₃/sodium ethyl sulfate | 1.50/0.30 | 238 | 208 | 88 | 87 | 6 | 6 | 4 | 5 | 13 | 14 |
| J18 | H₃BO₃/sodium ethyl sulfate | 1.50/0.50 | 238 | 209 | 88 | 87 | 6 | 6 | 4 | 4 | 12 | 13 |
| J19 | H₃BO₃/sodium ethyl sulfate | 1.50/0.70 | 237 | 208 | 88 | 86 | 6 | 6 | 4 | 5 | 14 | 15 |
| J20 | H₃BO₃/sodium ethyl sulfate | 1.50/1.00 | 234 | 205 | 88 | 86 | 6 | 6 | 4 | 4 | 12 | 12 |
| K3 | H₃BO₃ | 2.00 | 241 | 211 | 88 | 80 | 9 | 16 | 4 | 15 | 17 | 36 |
| J21 | H₃BO₃/sodium ethyl sulfate | 2.00/0.10 | 239 | 210 | 88 | 84 | 8 | 8 | 5 | 7 | 17 | 21 |
| J22 | H₃BO₃/sodium ethyl sulfate | 2.00/0.30 | 235 | 206 | 87 | 86 | 7 | 7 | 5 | 6 | 15 | 16 |
| J23 | H₃BO₃/sodium ethyl sulfate | 2.00/0.50 | 235 | 205 | 87 | 84 | 8 | 7 | 6 | 6 | 16 | 17 |
| J24 | H₃BO₃/sodium ethyl sulfate | 2.00/0.70 | 233 | 202 | 87 | 85 | 8 | 7 | 6 | 6 | 16 | 16 |
| J25 | H₃BO₃/sodium ethyl sulfate | 2.00/1.00 | 232 | 201 | 87 | 85 | 7 | 6 | 5 | 5 | 15 | 14 |
| K4 | - | - | 232 | 197 | 85 | 78 | 15 | 22 | 5 | 19 | 27 | 41 |

From the results shown in Table 6, it is understood that the test cells of Experimental Examples J1 to J25 have the positive electrode resistance kept low as compared with the test cells of Experimental Examples K1 to K3. In particular, the difference is pronounced after the charge-discharge cycle. In addition, the test cells of Experimental Examples J1 to J25 also exhibit excellent charge-discharge cycle characteristics.

### <Experimental Example L1>

### [Production of Positive Electrode Active Material]

LiOH, a Ni_{0.9}Co_{0.05}Mn_{0.05}(OH)₂ powder obtained by a coprecipitation method, and Zr(OH)₄ were mixed so that a molar ratio of Li to a total amount of Ni, Co, and Mn became 1.05:1:0.003 to obtain a mixture. This mixture was subjected to two-stage firing under an oxygen stream having an oxygen concentration of greater than or equal to 90% (at a flow rate of greater than or equal to 0.15 L/min and less than or equal to 0.2 L/min per 1 L of furnace volume). Specifically, the mixture was heated from room temperature to 670°C over 5 hours, and then from 650°C to 810°C over 2 hours. Thereafter, the temperature was maintained at 810°C for 3 hours to obtain a lithium transition metal composite oxide.

By observation of the obtained lithium transition metal composite oxide using SEM, it was confirmed that most of the particles of the composite oxide were single particles each composed of one primary particle. When the D50 and crystallite size of the lithium transition metal composite oxide were measured by the above method, the D50 was 1.8 µm, the BET specific surface area was 1.1 m²/g, and the crystallite size was 528 Å. The crystal structure of the lithium transition metal composite oxide was a layered rock-salt structure belonging to the space group R-3m.

The obtained lithium transition metal composite oxide was washed with water to remove excess lithium, and the washed composite oxide was dried and then disintegrated using a jet mill. Boric acid and sodium ethyl sulfate were added to and mixed with the disintegrated lithium transition metal composite oxide, followed by heat treatment at 300°C for 3 hours in an oxygen atmosphere to obtain a positive electrode active material in which boric acid and sodium ethyl sulfate adhered to particle surfaces of the lithium transition metal composite oxide. The addition amounts were adjusted so that the contents of boric acid and sodium ethyl sulfate became 0.50 mol% and 0.10 mol%, respectively, relative to a total molar amount of metal elements excluding Li in the composite oxide.

A test cell was produced in the same manner as in Experimental Example A1, except that the positive electrode active material was used, and the performance evaluation was conducted.

### <Experimental Examples L2 to L25>

A positive electrode active material and a test cell were produced in the same manner as in Experimental Example L1, except that the amounts of boric acid and sodium ethyl sulfate added were adjusted to those shown in Table 7, and the performance of the test cell was evaluated as charging up to 4.4 V (vs. Li metal). The state of the cell voltage of 4.4 V was regarded as SOC 100%, and the IV resistance was evaluated.

In each of the positive electrode active materials of Experimental Examples L1 to L25, it was confirmed that particles of boric acid and sodium ethyl sulfate were dispersed on particle surfaces of the composite oxide. It was also confirmed by X-ray photoelectron spectroscopy (XPS) that peaks derived from B, S, and Na were each present on particle surfaces of the composite oxide and in a region at a depth shallower than 100 nm from the surfaces. It was further confirmed that a peak derived from Ni having a binding energy in a range of greater than or equal to 858 eV and less than or equal to 862 eV and a peak derived from Mn having a binding energy in a range of greater than or equal to 645 eV and less than or equal to 649 eV were each present on particle surfaces of the composite oxide and in a region at a depth of less than 50 nm from the surfaces.

### <Experimental Example M1>

A positive electrode active material and a test cell were produced in the same manner as in Experimental Example L1, except that the step of adding sodium ethyl sulfate was omitted, and the performance evaluation was conducted.

**[Table 7]**

| | Additive | Addition amount (mass%) | Charge capacity | Discharge capacity | Efficiency (%) | Retention rate (%) | IV Resistance | | | | | |
|---|---|---|---|---|---|---|---|---|---|---|---|---|
| | | | | | | | SOC10% | | SOC50% | | SOC100% | |
| | | | | | | | Initial | 30cyc | Initial | 30cyc 30cyc | Initial | 30cyc |
| L1 | H₃BO₃/sodium ethyl sulfate | 0.50/0.10 | 242 | 211 | 87 | 95 | 4 | 5 | 2 | 3 | 8 | 11 |
| L2 | H₃BO₃/sodium ethyl sulfate | 0.50/0.30 | 241 | 210 | 87 | 96 | 4 | 5 | 2 | 3 | 7 | 10 |
| L3 | H₃BO₃/sodium ethyl sulfate | 0.50/0.50 | 241 | 210 | 87 | 96 | 4 | 5 | 2 | 3 | 7 | 9 |
| L4 | H₃BO₃/sodium ethyl sulfate | 0.50/0.70 | 240 | 210 | 87 | 96 | 4 | 5 | 2 | 3 | 6 | 9 |
| L5 | H₃BO₃/sodium ethyl sulfate | 0.50/1.00 | 240 | 209 | 87 | 96 | 4 | 5 | 2 | 3 | 7 | 9 |
| L6 | H₃BO₃/sodium ethyl sulfate | 0.75/0.10 | 242 | 211 | 87 | 95 | 4 | 6 | 2 | 3 | 7 | 11 |
| L7 | H₃BO₃/sodium ethyl sulfate | 0.75/0.30 | 242 | 211 | 87 | 96 | 4 | 5 | 2 | 3 | 7 | 9 |
| L8 | H₃BO₃/sodium ethyl sulfate | 0.75/0.50 | 243 | 212 | 87 | 97 | 4 | 5 | 2 | 3 | 6 | 9 |
| L9 | H₃BO₃/sodium ethyl sulfate | 0.75/0.70 | 241 | 211 | 87 | 97 | 4 | 5 | 2 | 3 | 6 | 9 |
| L10 | H₃BO₃/sodium ethyl sulfate | 0.75/1.00 | 241 | 211 | 88 | 96 | 4 | 5 | 2 | 3 | 7 | 10 |
| L11 | H₃BO₃/sodium ethyl sulfate | 1.00/0.10 | 241 | 211 | 88 | 95 | 4 | 6 | 2 | 3 | 7 | 10 |
| L12 | H₃BO₃/sodium ethyl sulfate | 1.00/0.30 | 240 | 210 | 88 | 96 | 4 | 5 | 2 | 3 | 7 | 10 |
| L13 | H₃BO₃/sodium ethyl sulfate | 1.00/0.50 | 240 | 210 | 87 | 97 | 4 | 5 | 2 | 3 | 6 | 9 |
| L14 | H₃BO₃/sodium ethyl sulfate | 1.00/0.70 | 240 | 211 | 88 | 97 | 4 | 5 | 2 | 3 | 6 | 9 |
| L15 | H₃BO₃/sodium ethyl sulfate | 1.00/1.00 | 240 | 211 | 88 | 97 | 4 | 5 | 2 | 3 | 7 | 10 |
| L16 | H₃BO₃/sodium ethyl sulfate | 1.50/0.10 | 241 | 210 | 87 | 97 | 5 | 6 | 2 | 3 | 7 | 10 |
| L17 | H₃BO₃/sodium ethyl sulfate | 1.50/0.30 | 240 | 210 | 87 | 97 | 4 | 5 | 2 | 3 | 7 | 10 |
| L18 | H₃BO₃/sodium ethyl sulfate | 1.50/0.50 | 241 | 211 | 88 | 97 | 4 | 5 | 2 | 3 | 7 | 9 |
| L19 | H₃BO₃/sodium ethyl sulfate | 1.50/0.70 | 240 | 210 | 88 | 97 | 4 | 5 | 2 | 3 | 7 | 9 |
| L20 | H₃BO₃/sodium ethyl sulfate | 1.50/1.00 | 239 | 210 | 88 | 97 | 4 | 5 | 2 | 3 | 7 | 9 |
| L21 | H₃BO₃/sodium ethyl sulfate | 2.00/0.10 | 241 | 211 | 88 | 97 | 5 | 6 | 2 | 4 | 7 | 10 |
| L22 | H₃BO₃/sodium ethyl sulfate | 2.00/0.30 | 240 | 209 | 87 | 97 | 4 | 6 | 2 | 4 | 7 | 10 |
| L23 | H₃BO₃/sodium ethyl sulfate | 2.00/0.50 | 239 | 209 | 87 | 97 | 4 | 6 | 2 | 4 | 7 | 9 |
| L24 | H₃BO₃/sodium ethyl sulfate | 2.00/0.70 | 239 | 209 | 87 | 96 | 4 | 6 | 2 | 3 | 7 | 10 |
| L25 | H₃BO₃/sodium ethyl sulfate | 2.00/1.00 | 238 | 208 | 88 | 96 | 4 | 6 | 2 | 3 | 7 | 9 |
| M1 | - | - | 241 | 208 | 86 | 85 | 5 | 9 | 2 | 5 | 12 | 15 |

From the results shown in Table 7, it is understood that the test cells of Experimental Examples L1 to L25 have the positive electrode resistance kept low as compared with the test cell of Experimental Example M1. In addition, the test cells of Experimental Examples L1 to L25 also exhibit excellent charge-discharge cycle characteristics. It was also confirmed that the effect was obtained even when Zr was included in an amount of less than or equal to 0.05 mol%.

### <Experimental Example N1>

### [Production of Positive Electrode Active Material]

LiOH and a Ni_{0.75}Co_{0.05}Mn_{0.20}(OR)₂ powder obtained by a coprecipitation method were mixed so that a molar ratio of Li to a total amount of Ni, Co, and Mn became 1.05:1 to obtain a mixture. This mixture was subjected to two-stage firing under an oxygen stream having an oxygen concentration of greater than or equal to 90% (at a flow rate of greater than or equal to 0.15 L/min and less than or equal to 0.2 L/min per 1 L of furnace volume). Specifically, the mixture was heated from room temperature to 670°C over 5 hours, and then from 650°C to 900°C over 2 hours. Thereafter, the temperature was maintained at 900°C for 3 hours to obtain a lithium transition metal composite oxide.

By observation of the obtained lithium transition metal composite oxide using SEM, it was confirmed that most of the particles of the composite oxide were single particles each composed of one primary particle. When the D50 and crystallite size of the lithium transition metal composite oxide were measured by the above method, the D50 was 1.6 µm, the BET specific surface area was 1.5 m²/g, and the crystallite size was 529 Å. The crystal structure of the lithium transition metal composite oxide was a layered rock-salt structure belonging to the space group R-3m.

The obtained lithium transition metal composite oxide was washed with water to remove excess lithium, and the washed composite oxide was dried and then disintegrated using a jet mill. Boric acid and sodium ethyl sulfate were added to and mixed with the disintegrated lithium transition metal composite oxide, followed by heat treatment at 300°C for 3 hours in an oxygen atmosphere to obtain a positive electrode active material in which boric acid and sodium ethyl sulfate adhered to particle surfaces of the lithium transition metal composite oxide. The addition amounts were adjusted so that the contents of boric acid and sodium ethyl sulfate became 0.50 mol% and 0.10 mol%, respectively, relative to a total molar amount of metal elements excluding Li in the composite oxide.

A test cell was produced in the same manner as in Experimental Example A1, except that the positive electrode active material was used, and the performance evaluation was conducted.

### <Experimental Examples N2 to N25>

A positive electrode active material and a test cell were produced in the same manner as in Experimental Example N1, except that the amounts of boric acid and sodium ethyl sulfate added were adjusted to those shown in Table 8, and the performance evaluation was conducted.

In each of the positive electrode active materials of Experimental Examples N1 to N25, it was confirmed that particles of boric acid and sodium ethyl sulfate were dispersed on particle surfaces of the composite oxide. It was also confirmed by X-ray photoelectron spectroscopy (XPS) that peaks derived from B, S, and Na were each present on particle surfaces of the composite oxide and in a region at a depth of 100 nm from the surfaces. It was further confirmed that a peak derived from Ni having a binding energy in a range of greater than or equal to 858 eV and less than or equal to 862 eV and a peak derived from Mn having a binding energy in a range of greater than or equal to 645 eV and less than or equal to 649 eV were each present on particle surfaces of the composite oxide and in a region at a depth of less than 50 nm from the surfaces.

### <Experimental Example P1>

A positive electrode active material and a test cell were produced in the same manner as in Experimental Example N1, except that the step of adding sodium ethyl sulfate was omitted, and the performance evaluation was conducted.

**[Table 8]**

| | Additive | Addition amount (mass%) | Charge capacity | Discharge capacity | Efficiency (%) | Retention rate (%) | IV Resistance | | | | | |
|---|---|---|---|---|---|---|---|---|---|---|---|---|
| | | | | | | | SOC10% | | SOC50% | | SOC100% | |
| | | | | | | | Initial | 30cyc | Initial | 30cyc | Initial | 30cyc |
| N1 | H₃BO₃/sodium ethyl sulfate | 0.50/0.10 | 236 | 209 | 89 | 87 | 6 | 17 | 2 | 8 | 11 | 19 |
| N2 | H₃BO₃/sodium ethyl sulfate | 0.50/0.30 | 236 | 209 | 89 | 90 | 5 | 12 | 2 | 5 | 10 | 16 |
| N3 | H₃BO₃/sodium ethyl sulfate | 0.50/0.50 | 235 | 209 | 89 | 92 | 4 | 8 | 2 | 8 | 9 | 17 |
| N4 | H₃BO₃/sodium ethyl sulfate | 0.50/0.70 | 234 | 208 | 89 | 93 | 4 | 7 | 2 | 4 | 9 | 14 |
| N5 | H₃BO₃/sodium ethyl sulfate | 0.50/1.00 | 234 | 209 | 89 | 93 | 4 | 7 | 2 | 4 | 9 | 14 |
| N6 | H₃BO₃/sodium ethyl sulfate | 0.75/0.10 | 236 | 211 | 89 | 89 | 5 | 11 | 2 | 6 | 9 | 18 |
| N7 | H₃BO₃/sodium ethyl sulfate | 0.75/0.30 | 235 | 211 | 89 | 92 | 4 | 8 | 2 | 4 | 7 | 13 |
| N8 | H₃BO₃/sodium ethyl sulfate | 0.75/0.50 | 235 | 210 | 89 | 94 | 4 | 6 | 2 | 3 | 7 | 11 |
| N9 | H₃BO₃/sodium ethyl sulfate | 0.75/0.70 | 235 | 211 | 90 | 94 | 4 | 6 | 2 | 3 | 6 | 10 |
| N10 | H₃BO₃/sodium ethyl sulfate | 0.75/1.00 | 236 | 212 | 90 | 94 | 3 | 6 | 2 | 3 | 6 | 10 |
| N11 | H₃BO₃/sodium ethyl sulfate | 1.00/0.10 | 240 | 217 | 91 | 92 | 3 | 7 | 2 | 4 | 6 | 14 |
| N12 | H₃BO₃/sodium ethyl sulfate | 1.00/0.30 | 238 | 215 | 90 | 94 | 3 | 5 | 2 | 3 | 5 | 10 |
| N13 | H₃BO₃/sodium ethyl sulfate | 1.00/0.50 | 238 | 215 | 90 | 94 | 3 | 5 | 2 | 3 | 5 | 9 |
| N14 | H₃BO₃/sodium ethyl sulfate | 1.00/0.70 | 238 | 216 | 91 | 95 | 3 | 5 | 2 | 3 | 5 | 8 |
| N15 | H₃BO₃/sodium ethyl sulfate | 1.00/1.00 | 237 | 214 | 90 | 95 | 3 | 5 | 2 | 3 | 5 | 9 |
| N16 | H₃BO₃/sodium ethyl sulfate | 1.50/0.10 | 238 | 215 | 90 | 95 | 3 | 5 | 2 | 3 | 6 | 10 |
| N17 | H₃BO₃/sodium ethyl sulfate | 1.50/0.30 | 237 | 213 | 90 | 95 | 3 | 5 | 2 | 3 | 5 | 8 |
| N18 | H₃BO₃/sodium ethyl sulfate | 1.50/0.50 | 237 | 215 | 91 | 96 | 3 | 5 | 2 | 3 | 5 | 7 |
| N19 | H₃BO₃/sodium ethyl sulfate | 1.50/0.70 | 237 | 215 | 90 | 96 | 3 | 5 | 2 | 3 | 5 | 8 |
| N20 | H₃BO₃/sodium ethyl sulfate | 1.50/1.00 | 237 | 215 | 90 | 96 | 3 | 4 | 2 | 3 | 5 | 8 |
| N21 | H₃BO₃/sodium ethyl sulfate | 2.00/0.10 | 237 | 214 | 90 | 96 | 4 | 6 | 2 | 4 | 6 | 10 |
| N22 | H₃BO₃/sodium ethyl sulfate | 2.00/0.30 | 238 | 215 | 90 | 96 | 3 | 5 | 2 | 3 | 5 | 8 |
| N23 | H₃BO₃/sodium ethyl sulfate | 2.00/0.50 | 235 | 212 | 90 | 96 | 4 | 5 | 2 | 3 | 5 | 8 |
| N24 | H₃BO₃/sodium ethyl sulfate | 2.00/0.70 | 236 | 212 | 90 | 97 | 3 | 4 | 2 | 3 | 5 | 8 |
| N25 | H₃BO₃/sodium ethyl sulfate | 2.00/1.00 | 236 | 212 | 90 | 97 | 3 | 4 | 2 | 3 | 5 | 7 |
| P1 | - | - | 237 | 205 | 87 | 84 | 12 | 21 | 3 | 15 | 20 | 34 |

From the results shown in Table 8, it is understood that the test cells of Experimental Examples N1 to N25 have the positive electrode resistance kept low as compared with the test cell of Experimental Example N25. In addition, the test cells of Experimental Examples N1 to N25 also exhibit excellent charge-discharge cycle characteristics. Therefore, it is presumed that the effect is obtained even when the content of Ni is 50% of the total amount of transition metals.

### <Experimental Examples R1 to R8>

A positive electrode active material and a test cell were produced in the same manner as in Experimental Example A1, except that boric acid was added together with sodium ethyl sulfate, the performance evaluation was conducted in a temperature environment of 45°C, and the disintegration step using a jet mill was omitted, and the performance evaluation was conducted. The amounts of boric acid and sodium ethyl sulfate added are shown in Table 9 together with the evaluation results.

### <Experimental Examples S1 to S8>

A positive electrode active material and a test cell were produced in the same manner as in Experimental Example R1, except that the additives shown in Table 9 were used in place of boric acid and sodium ethyl sulfate, and the addition amounts thereof were adjusted to those shown in Table 9, and the performance evaluation was conducted.

### <Experimental Example S9>

A positive electrode active material and a test cell were produced in the same manner as in Experimental Example R1, except that the step of adding boric acid and sodium ethyl sulfate was omitted, and the performance evaluation was conducted.

**[Table 9]**

| | Additive | Addition amount (mass%) | Charge capacity | Discharge capacity | Efficiency (%) | Retention rate (%) | IV Resistance | | | | | |
|---|---|---|---|---|---|---|---|---|---|---|---|---|
| | | | | | | | SOC10% | | SOC50% | | SOC100% | |
| | | | | | | | Initial | 30cvc | Initial | 30cvc | Initial | 30cvc |
| R1 | H₃BO₃/sodium ethyl sulfate | 1.00/1.00 | 241 | 223 | 93 | 81 | 3 | 4 | 2 | 3 | 9 | 14 |
| R2 | H₃BO₃/sodium ethyl sulfate | 1.00/0.70 | 241 | 223 | 93 | 82 | 3 | 4 | 2 | 3 | 10 | 15 |
| R3 | H₃BO₃/sodium ethyl sulfate | 1.00/0.50 | 242 | 223 | 92 | 81 | 3 | 4 | 2 | 3 | 10 | 15 |
| R4 | H₃BO₃/sodium ethyl sulfate | 1.00/0.30 | 243 | 225 | 92 | 81 | 3 | 4 | 2 | 3 | 10 | 16 |
| R5 | H₃BO₃/sodium ethyl sulfate | 1.00/0.10 | 244 | 225 | 92 | 80 | 3 | 6 | 1 | 5 | 10 | 20 |
| R6 | H₃BO₃/sodium ethyl sulfate | 0.02/0.007 | 240 | 221 | 92 | 70 | 4 | 5 | 2 | 5 | 12 | 19 |
| R7 | H₃BO₃/sodium ethyl sulfate | 0.01/0.007 | 243 | 225 | 93 | 79 | 3 | 5 | 1 | 3 | 9 | 16 |
| R8 | H₃BO₃/sodium ethyl sulfate | 0.005/0.007 | 242 | 223 | 92 | 80 | 4 | 8 | 2 | 6 | 13 | 23 |
| S1 | H₃BO₃ | 2.00 | 246 | 228 | 93 | 76 | 3 | 7 | 1 | 6 | 12 | 25 |
| S2 | H₃BO₃ | 1.00 | 246 | 227 | 92 | 76 | 4 | 10 | 1 | 10 | 13 | 29 |
| S3 | H₃BO₃ | 0.50 | 249 | 228 | 92 | 74 | 5 | 12 | 2 | 12 | 15 | 32 |
| S4 | Sodium ethyl sulfate | 1.50 | 235 | 214 | 91 | 78 | 6 | 7 | 4 | 7 | 20 | 25 |
| S5 | Sodium ethyl sulfate | 1.00 | 237 | 215 | 91 | 77 | 5 | 7 | 2 | 6 | 17 | 25 |
| S6 | Sodium ethyl sulfate | 0.70 | 236 | 215 | 91 | 75 | 4 | 8 | 2 | 7 | 16 | 26 |
| S7 | Sodium ethyl sulfate | 0.50 | 238 | 217 | 91 | 61 | 4 | 8 | 2 | 8 | 15 | 25 |
| S8 | Sodium ethyl sulfate | 0.20 | 241 | 219 | 91 | 56 | 5 | 14 | 2 | 15 | 17 | 39 |
| S9 | - | - | 240 | 216 | 90 | 50 | 7 | 16 | 2 | 16 | 19 | 42 |

From the results shown in Table 9, it is understood that the test cells of Experimental Examples R1 to R8 have the positive electrode resistance kept low as compared with the test cell of Experimental Example S9. The test cells of Experimental Examples R1 to R8 have lower positive electrode resistance than the test cells of Experimental Examples S1 to S8. Furthermore, the test cells of Experimental Examples R1 to R8 also exhibit excellent charge-discharge cycle characteristics.

### <Experimental Examples T1 to T8>

A positive electrode active material and a test cell were produced in the same manner as in Experimental Example L1, except that the amounts of boric acid and sodium ethyl sulfate added were adjusted to those shown in Table 7, and the performance evaluation was conducted in a temperature environment of 45°C, and the performance evaluation was conducted.

### <Experimental Example Ul>

A positive electrode active material and a test cell were produced in the same manner as in Experimental Example T1, except that the step of adding boric acid and sodium ethyl sulfate was omitted, and the performance evaluation was conducted.

**[Table 10]**

| | Additive | Addition amount (mass%) | Charge capacity | Discharge capacity | Efficiency (%) | Retention rate (%) | IV Resistance | | | | | |
|---|---|---|---|---|---|---|---|---|---|---|---|---|
| | | | | | | | SOC10% | | SOC50% | | SOC100% | |
| | | | | | | | Initial | 30cyc | Initial | 30cyc | Initial | 30cyc |
| T1 | H₃BO₃/sodium ethyl sulfate | 2.00/0.50 | 243 | 225 | 92 | 93 | 3 | 6 | 1 | 3 | 6 | 9 |
| T2 | H₃BO₃/sodium ethyl sulfate | 1.50/0.50 | 245 | 229 | 93 | 94 | 5 | 6 | 3 | 3 | 7 | 12 |
| T3 | H₃BO₃/sodium ethyl sulfate | 1.00/0.50 | 244 | 226 | 93 | 93 | 3 | 6 | 1 | 2 | 6 | 11 |
| T4 | H₃BO₃/sodium ethyl sulfate | 0.75/1.00 | 244 | 225 | 92 | 94 | 3 | 6 | 1 | 1 | 7 | 12 |
| T5 | H₃BO₃/sodium ethyl sulfate | 0.75/0.70 | 244 | 226 | 92 | 94 | 3 | 6 | 1 | 1 | 7 | 12 |
| T6 | H₃BO₃/sodium ethyl sulfate | 0.75/0.50 | 244 | 225 | 92 | 93 | 3 | 7 | 1 | 1 | 7 | 12 |
| T7 | H₃BO₃/sodium ethyl sulfate | 0.75/0.30 | 244 | 225 | 92 | 90 | 4 | 8 | 1 | 2 | 7 | 13 |
| T8 | H₃BO₃/sodium ethyl sulfate | 0.50/0.50 | 243 | 222 | 91 | 92 | 4 | 8 | 1 | 2 | 7 | 12 |
| U1 | - | - | 250 | 222 | 89 | 82 | 8 | 12 | 1 | 5 | 11 | 19 |

From the results shown in Table 10, it is understood that the test cells of Experimental Examples T1 to T8 have the positive electrode resistance kept low as compared with the test cell of Experimental Example U1. In addition, the test cells of Experimental Examples T1 to T8 also exhibit excellent charge-discharge cycle characteristics.

The present disclosure will be further described with reference to embodiments below.

Constitution 1: A positive electrode active material for a non-aqueous electrolyte secondary battery, including:
a lithium transition metal composite oxide having a total content of Ni and Mn of greater than or equal to 80 mol% relative to a total molar amount of metal elements excluding Li, wherein the lithium transition metal composite oxide has a single-particle morphology, and has a volume-based median diameter of greater than or equal to 0.5 µm and less than or equal to 5.0 µm, and a crystallite size of greater than or equal to 370 Å and less than or equal to 1500 Å, wherein a sulfur compound and a boron compound are present on particle surfaces of the lithium transition metal composite oxide, and wherein a photoelectron spectrum obtained by X-ray photoelectron spectroscopy (XPS) shows a peak derived from Ni having a binding energy in a range of greater than or equal to 172 eV and less than or equal to 176 eV and a peak derived from Mn having a binding energy in a range of greater than or equal to 194 eV and less than or equal to 198 eV on particle surfaces of the lithium transition metal composite oxide and in a region at a depth of less than 50 nm from the surfaces.

Constitution 2: The positive electrode active material for a non-aqueous electrolyte secondary battery according to Constitution 1, wherein the lithium transition metal composite oxide further includes at least one selected from the group consisting of Mg, Al, Ca, Nb, Sr, Zr, and W.

Constitution 3: The positive electrode active material for a non-aqueous electrolyte secondary battery according to Constitution 1 or 2, wherein the sulfur compound is a sulfur-containing oxidized species.

Constitution 4: The positive electrode active material for a non-aqueous electrolyte secondary battery according to any one of Constitutions 1 to 3, wherein the sulfur compound includes a functional group represented by formula 1: 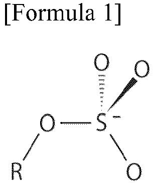 wherein R is an alkyl group having less than or equal to 5 carbon atoms.

Constitution 5: The positive electrode active material for a non-aqueous electrolyte secondary battery according to any one of Constitutions 1 to 4, wherein the sulfur compound is at least one selected from the group consisting of lithium methyl sulfate, lithium ethyl sulfate, lithium propyl sulfate, sodium methyl sulfate, sodium ethyl sulfate, sodium propyl sulfate, potassium methyl sulfate, potassium ethyl sulfate, and potassium propyl sulfate.

Constitution 6: The positive electrode active material for a non-aqueous electrolyte secondary battery according to any one of Constitutions 1 to 5, wherein the sulfur compound is present on particle surfaces of the lithium transition metal composite oxide and in a region at a depth of less than 100 nm from the surfaces in an amount of greater than or equal to 0.1 mol% and less than or equal to 2.0 mol% relative to a total molar amount of metal elements excluding Li constituting the lithium transition metal composite oxide.

Constitution 7: The positive electrode active material for a non-aqueous electrolyte secondary battery according to any one of Constitutions 1 to 6, wherein at least one of the group consisting of Na and K is present on particle surfaces of the lithium transition metal composite oxide and in a region at a depth of less than 100 nm from the surfaces.

Constitution 8: The positive electrode active material for a non-aqueous electrolyte secondary battery according to any one of Constitutions 1 to 7, wherein the boron compound is present on particle surfaces of the lithium transition metal composite oxide and in a region at a depth of less than 100 nm from the surfaces in an amount of greater than or equal to 0.1 mol% and less than or equal to 2.0 mol% relative to a total molar amount of metal elements excluding Li constituting the lithium transition metal composite oxide.

Constitution 9: A non-aqueous electrolyte secondary battery, comprising:
a positive electrode including the positive electrode active material according to any one of Constitutions 1 to 8;
a negative electrode; and
a non-aqueous electrolyte.

### REFERENCE SIGNS LIST

10 Non-aqueous electrolyte secondary battery, 11 Positive electrode, 12 Negative electrode, 13 Separator, 14 Electrode assembly, 16 Housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Working electrode, 31 Counter electrode, 32 Reference electrode, 34 Separator, 35 Outer case, 36 Electrolyte solution, 38 Electrode lead

## Claims

1. A positive electrode active material for a non-aqueous electrolyte secondary battery, including:
a lithium transition metal composite oxide having a total content of Ni and Mn of greater than or equal to 80 mol% relative to a total molar amount of metal elements excluding Li,
wherein the lithium transition metal composite oxide has a single-particle morphology, and has a volume-based median diameter of greater than or equal to 0.5 µm and less than or equal to 5.0 µm, and a crystallite size of greater than or equal to 370 Å and less than or equal to 1500 Å,
wherein a sulfur compound and a boron compound are present on particle surfaces of the lithium transition metal composite oxide, and
wherein a photoelectron spectrum obtained by X-ray photoelectron spectroscopy (XPS) shows a peak derived from Ni having a binding energy in a range of greater than or equal to 172 eV and less than or equal to 176 eV and a peak derived from Mn having a binding energy in a range of greater than or equal to 194 eV and less than or equal to 198 eV on particle surfaces of the lithium transition metal composite oxide and in a region at a depth of less than 50 nm from the surfaces.

2. The positive electrode active material for a non-aqueous electrolyte secondary battery according to claim 1, wherein the lithium transition metal composite oxide further includes at least one selected from the group consisting of Mg, Al, Ca, Nb, Sr, Zr, and W.

3. The positive electrode active material for a non-aqueous electrolyte secondary battery according to claim 1, wherein the sulfur compound is a sulfur-containing oxidized species.

4. The positive electrode active material for a non-aqueous electrolyte secondary battery according to claim 1, wherein the sulfur compound includes a functional group represented by formula 1: 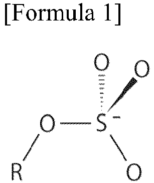 wherein R is an alkyl group having less than or equal to 5 carbon atoms.

5. The positive electrode active material for a non-aqueous electrolyte secondary battery according to claim 1, wherein the sulfur compound is at least one selected from the group consisting of lithium methyl sulfate, lithium ethyl sulfate, lithium propyl sulfate, sodium methyl sulfate, sodium ethyl sulfate, sodium propyl sulfate, potassium methyl sulfate, potassium ethyl sulfate, and potassium propyl sulfate.

6. The positive electrode active material for a non-aqueous electrolyte secondary battery according to claim 1, wherein the sulfur compound is present on particle surfaces of the lithium transition metal composite oxide and in a region at a depth of less than 100 nm from the surfaces in an amount of greater than or equal to 0.1 mol% and less than or equal to 2.0 mol% relative to a total molar amount of metal elements excluding Li constituting the lithium transition metal composite oxide.

7. The positive electrode active material for a non-aqueous electrolyte secondary battery according to claim 1, wherein at least one of the group consisting of Na and K is present on particle surfaces of the lithium transition metal composite oxide and in a region at a depth of less than 100 nm from the surfaces.

8. The positive electrode active material for a non-aqueous electrolyte secondary battery according to claim 1, wherein the boron compound is present on particle surfaces of the lithium transition metal composite oxide and in a region at a depth of less than 100 nm from the surfaces in an amount of greater than or equal to 0.1 mol% and less than or equal to 2.0 mol% relative to a total molar amount of metal elements excluding Li constituting the lithium transition metal composite oxide.

9. A non-aqueous electrolyte secondary battery, comprising:
the positive electrode including the positive electrode active material according to any one of claims 1 to 8;
a negative electrode; and
a non-aqueous electrolyte.
